(19) Europäisches Patentamt / European Patent Office / Office européen des brevets

(11) **EP 4 648 350 A1**

(12) **EUROPEAN PATENT APPLICATION**
published in accordance with Art. 153(4) EPC

(43) Date of publication:
**12.11.2025 Bulletin 2025/46**

(51) International Patent Classification (IPC):
*H04L 9/00* (2022.01)

(21) Application number: **23914983.4**

(52) Cooperative Patent Classification (CPC):
**H04L 9/00**

(22) Date of filing: **20.12.2023**

(86) International application number:
**PCT/KR2023/021101**

(87) International publication number:
**WO 2024/147523 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.01.2023  KR 20230000442**
**22.02.2023  KR 20230023816**
**15.12.2023  KR 20230183562**

(71) Applicant: **CRYPTO LAB INC.**
**Gwanak-gu, Seoul 08826 (KR)**

(72) Inventors:
• **BAE, Youngjin**
**Seoul 08826 (KR)**
• **PARK, Jai Hyun**
**69100 Villeurbanne Lyon (FR)**

(74) Representative: **Dragotti & Associati S.P.A.**
**Via Nino Bixio, 7**
**20129 Milano (IT)**

(54) **METHOD AND ELECTRONIC DEVICE FOR PROCESSING HOMOMORPHIC CIPHERTEXT**

(57)    This method for processing an encrypted text comprises the steps of: storing a plurality of first pieces of homomorphic ciphertext homomorphically encrypted through a first method, and converting the plurality of stored first pieces of homomorphic ciphertext into second pieces of homomorphic ciphertext of a second method, wherein the converting step comprises the steps of: considering the plurality of first pieces of homomorphic ciphertext as pieces of homomorphic ciphertext having rank k and dimension 1, and converting same into third pieces of homomorphic ciphertext having a plurality of dimensions; and converting the third pieces of homomorphic ciphertext into the second pieces of homomorphic ciphertext having rank 1 and dimension N.

FIG. 6

**Description**

[Technical Field]

The present disclosure relates to a method and an electronic device for processing a homomorphic ciphertext, and more particularly, to a method and an electronic device for processing a homomorphic ciphertext, which enables efficient management of the ciphertext by performing a transformation on the homomorphic ciphertext.

[Background Art]

As communication technology develops and the spread of electronic devices becomes more active, efforts have been continuously made to maintain communication security between the electronic devices. Accordingly, encryption/decryption technology has been used in most communication environments.

If a message encrypted by the encryption technology is transmitted to the other party, the other party is required to perform decryption to use the message. In this case, the other party may waste resources and time in a process of decrypting encrypted data. In addition, the message may be easily leaked to a third party if the third party hacks the message while the other party temporarily decrypts the message for operation.

To solve these problems, homomorphic encryption methods have been studied. Homomorphic encryption may acquire the same result as an encrypted value acquired after performing an operation on a plaintext, even if the operation is performed on a ciphertext itself acquired without decrypting encrypted information. Therefore, various operations may be performed without decrypting the ciphertext.

There are various methods for performing the homomorphic encryption, and each encryption method may have different advantages and disadvantages. Therefore, there is a need for a method for using a homomorphic ciphertext method suitable for a corresponding process and a homomorphic ciphertext transformation method for implementing the method in each of the processes of transmitting, storing, and performing an operation on the homomorphic ciphertext.

[Disclosure]

[Technical Problem]

The present disclosure provides a method and an electronic device for processing a homomorphic ciphertext, which enables efficient management of the ciphertext by performing a transformation on the homomorphic ciphertext.

[Technical Solution]

According to an embodiment of the present disclosure, provided is method of an electronic device for processing a ciphertext, the method including: storing a plurality of first homomorphic ciphertexts homomorphically encrypted using a first method; and transforming the stored plurality of first homomorphic ciphertexts into a second homomorphic ciphertext using a second method.

The transforming may include transforming the plurality of first homomorphic ciphertexts into a third homomorphic ciphertext having multiple dimensions by viewing the plurality of first homomorphic ciphertexts as homomorphic ciphertexts each having rank k and dimension 1, and transforming the third homomorphic ciphertext into the second homomorphic ciphertext having rank 1 and dimension N.

In the performing of the transformation into the third homomorphic ciphertext, the plurality of first homomorphic ciphertexts may be transformed into k third homomorphic ciphertexts each having rank k and dimension N/k, and in the performing of the transformation into the second homomorphic ciphertext, the k third homomorphic ciphertexts may be transformed into the single second homomorphic ciphertext.

In the performing of the transformation into the third homomorphic ciphertext, the transformation into the third homomorphic ciphertext may be performed by packing a predetermined number of second homomorphic ciphertexts among the plurality of first homomorphic ciphertexts, and in the performing of the transformation into the second homomorphic ciphertext, the transformation into the second homomorphic ciphertext may be performed by performing ring switching on the homomorphic ciphertext using a ring having a dimension k times larger than each dimension of the k third homomorphic ciphertexts.

In the performing of the transformation into the third homomorphic ciphertext, the plurality of first homomorphic ciphertexts may be transformed into the plurality of third homomorphic ciphertexts each having dimension $N_0$ lower than dimension N and rank 1, and in the performing of the transformation into the second homomorphic ciphertext, the plurality of third homomorphic ciphertexts may be transformed into the second homomorphic ciphertext having rank 1 and dimension N.

The method may further include bootstrapping a modulus of the second homomorphic ciphertext to change the modulus of the second homomorphic ciphertext.

The bootstrapping may include expanding the modulus of the second homomorphic ciphertext, performing an approximation operation on the second homomorphic ciphertext whose modulus is expanded by using a function set to approximate a modulated range of a plaintext, and performing a linear transformation on the homomorphic ciphertext, on which the approximation operation is performed, into a ciphertext form.

The method may further include: acquiring a public key used for encrypting the first homomorphic ciphertext; and acquiring a random matrix included in the public key by applying a random matrix sampler function to a seed value included in the public key.

The method may further include: receiving a homomorphic operation command using some of the first homomorphic ciphertexts among the plurality of first homomorphic ciphertexts; transforming the second homomorphic ciphertext into the plurality of first homomorphic ciphertexts; transforming the plurality of first homomorphic ciphertexts corresponding to the homomorphic operation into a fourth homomorphic ciphertext using the second method; and performing the homomorphic operation on the fourth homomorphic ciphertext.

The method may further include: receiving the plurality of first homomorphic ciphertexts; and storing the second homomorphic ciphertext including the received plurality of first homomorphic ciphertexts.

The method may further include: receiving a transmission command for at least one first homomorphic ciphertext among the plurality of first homomorphic ciphertexts; transforming the second homomorphic ciphertext into the plurality of first homomorphic ciphertexts; and transmitting the at least one first homomorphic ciphertext corresponding to the transmission command to an external device.

According to an embodiment of the present disclosure, provided is an electronic device including: a memory; and a processor configured to transform a plurality of first homomorphic ciphertexts homomorphically encrypted using a first method into a second homomorphic ciphertext using a second method.

The processor may be configured to transform the plurality of first homomorphic ciphertexts into a third homomorphic ciphertext having multiple dimensions by viewing the plurality of first homomorphic ciphertexts as homomorphic ciphertexts each having rank k and dimension 1, and transform the third homomorphic ciphertext into the second homomorphic ciphertext having rank 1 and dimension N.

The processor may be configured to transform the plurality of first homomorphic ciphertexts into k third homomorphic ciphertexts each having rank k and dimension N/k, and transform the k third homomorphic ciphertexts into the single second homomorphic ciphertext.

The processor may be configured to perform the transformation into the third homomorphic ciphertext by packing a predetermined number of second homomorphic ciphertexts among the plurality of second homomorphic ciphertexts, and perform the transformation into the second homomorphic ciphertext by performing ring switching on the homomorphic ciphertext using a ring having a dimension k times larger than each dimension of the k third homomorphic ciphertexts.

The processor may be configured to transform the plurality of first homomorphic ciphertexts into the plurality of third homomorphic ciphertexts each having dimension $N_0$ lower than dimension N and rank 1, and transform the plurality of third homomorphic ciphertexts into the second homomorphic ciphertext having rank 1 and dimension N.

The processor may be configured to expand a modulus of the second homomorphic ciphertext to change the modulus of the second homomorphic ciphertext, perform an approximation operation on the second homomorphic ciphertext whose modulus is expanded by using a function set to approximate a modulated range of a plaintext, and perform a linear transformation on the homomorphic ciphertext, on which the approximation operation is performed, into a ciphertext form.

The processor may be configured to acquire a public key used for encrypting the first homomorphic ciphertext, and acquire a random matrix included in the public key by applying a random matrix sampler function to a seed value included in the public key.

The processor may be configured to transform the second homomorphic ciphertext into the plurality of first homomorphic ciphertexts if a homomorphic operation command using some of the first homomorphic ciphertexts among the plurality of first homomorphic ciphertexts is input, transform the plurality of first homomorphic ciphertexts corresponding to the homomorphic operation into a fourth homomorphic ciphertext using the second method, and perform the homomorphic operation on the fourth homomorphic ciphertext.

The electronic device may further include a communication device receiving the plurality of first homomorphic ciphertexts, wherein the processor is configured to store the second homomorphic ciphertext including the received plurality of first homomorphic ciphertexts in the memory.

The electronic device may further include a communication device communicating with an external device, wherein the processor is configured to transform the second homomorphic ciphertext into the plurality of first homomorphic ciphertexts if a transmission command for at least one first homomorphic ciphertext among the plurality of first homomorphic ciphertexts is input, and control the communication device to transmit the at least one first homomorphic ciphertext corresponding to the transmission command to the external device.

According to an embodiment of the present disclosure, provided is a computer-readable recording medium including a program for executing a method for processing a ciphertext, wherein the method includes receiving a plurality of first homomorphic ciphertexts homomorphically encrypted using a first method, and transforming the receiving plurality of first homomorphic ciphertexts into a second homomorphic ciphertext using a second method, and the transforming includes transforming the plurality of first homomorphic ciphertexts into a third homomorphic ciphertext having multiple dimensions by viewing the plurality of first homomorphic ciphertexts as homomorphic ciphertexts each having rank k and dimension 1, and transforming the third homomorphic ciphertext into the second homomorphic ciphertext having rank 1 and dimension N.

[Advantageous Effects]

In the present disclosure, the above-described operations may be performed using the homomorphic ciphertext method suitable for the transmission method, storage method, or operation method using the homomorphic ciphertext, thereby enabling more efficient processing of the homomorphic ciphertext.

In addition, the transformation method according to the present disclosure may enable faster transformation in the homomorphic ciphertext transformation process using the above-described method.

[Description of Drawings]

FIG. 1 is a diagram for describing a structure of a network system according to an embodiment of the present disclosure,

FIG. 2 is a block diagram showing a brief configuration of an electronic device according to an embodiment of the present disclosure,

FIG. 3 is a block diagram showing a detailed configuration of the electronic device according to an embodiment of the present disclosure,

FIG. 4 is a diagram for describing generation and decryption operations on an approximate homomorphic ciphertext,

FIG. 5 is a diagram for describing a bootstrapping operation according to the present disclosure,

FIG. 6 is a diagram for describing a merging operation on homomorphic ciphertexts according to an embodiment of the present disclosure,

FIG. 7 is a diagram for describing a merging operation on homomorphic ciphertexts according to another embodiment of the present disclosure,

FIG. 8 is a diagram for describing transmission and reception operations of the homomorphic ciphertext according to the present disclosure,

FIG. 9 is a diagram for describing embedding or extraction operation on the homomorphic ciphertext according to an embodiment of the present disclosure,

FIG. 10 is a diagram for describing a merging operation on homomorphic ciphertexts according to an embodiment of the present disclosure,

FIG. 11 is a diagram for describing a merging operation on homomorphic ciphertexts according to an embodiment of the present disclosure,

FIG. 12 is a diagram for describing a control method of the electronic device according to an embodiment of the present disclosure,

FIG. 13 is a diagram for describing a rearrangement method of homomorphic ciphertexts according to an embodiment of the present disclosure,

FIG. 14 is a diagram for describing a decomposition operation on the homomorphic ciphertext according to an embodiment of the present disclosure, and

FIG. 15 is a sequence diagram for describing the transmission and reception operations of the homomorphic ciphertext according to an embodiment of the present disclosure.

[Mode for Invention]

Hereinafter, the present disclosure is described in detail with reference to the accompanying drawings. Encryption/decryption may be applied as necessary to a process of transmitting information (or data) that is performed in the present disclosure, and an expression describing the process of transmitting the information (or data) in the present disclosure and the claims should be interpreted as including all cases of the encryption/decryption even if not separately mentioned. In the present disclosure, an expression such as "transmission (transfer) from A to B" or "reception from A to B" may include transmission (transfer) or reception while having another medium included in the middle, and may not necessarily express only the direct transmission (transfer) or reception from A to B.

In describing the present disclosure, a sequence of each operation should be understood as non-restrictive unless a preceding operation in the sequence of each operation needs to logically and temporally precede a subsequent operation. That is, except for the above exceptional case, the essence of the present disclosure is not affected even if a process described as the subsequent operation is performed before a process described as the preceding operation, and the scope of the present disclosure should also be defined regardless of the sequences of the operations. In addition, in this specification, "A or B" may be defined to indicate not only selectively indicating either A or B, but also including both A and B. In addition, a term "including" in the present disclosure may encompass the meaning of further including other components in addition to components listed as being included.

The present disclosure only describes essential components necessary for describing the present disclosure, and does not mention components unrelated to the essence of the present disclosure. In addition, it should not be interpreted as an exclusive meaning that the present disclosure includes only the mentioned components, and should be interpreted as a non-exclusive meaning that the present disclosure may include other components as well.

In addition, in the present disclosure, a "value" may be defined as a concept that includes a vector as well as a scalar value. In addition, in the present disclosure, an expression such as "calculate" or "compute" may be replaced with an expression that refers to generating a result of the corresponding calculation or computation. In addition, unless otherwise indicated, an operation on a ciphertext described below refers to a homomorphic operation. For example, addition on homomorphic ciphertexts indicates homomorphic addition on two homomorphic ciphertexts.

Mathematical operations and calculations in each step of the present disclosure described below may be implemented as computer operations by a known coding method and/or coding designed to be suitable for the present disclosure to perform the corresponding operations or calculations.

Specific equations described below are illustratively provided among possible alternatives, and the scope of the present disclosure should not be construed as being limited to the equations mentioned in the present disclosure.

For convenience of description, the present disclosure defines the following notations:

$a \leftarrow D$: Select an element a based on distribution D.

$s_1, s_2 \in R$: Each of $s_1$ and $s_2$ is an element belonging to a set R.

$\bmod(q)$: Perform modular operation with an element q.

$\lfloor \cdot \rceil$ : Round an internal value.

Hereinafter, various embodiments of the present disclosure are described in detail with reference to the accompanying drawings.

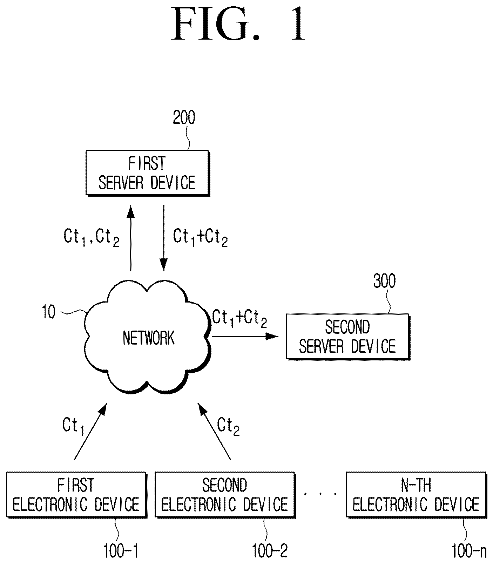

FIG. 1 is a diagram for describing a structure of a network system according to an embodiment of the present disclosure.

Referring to FIG. 1, the network system may include a plurality of electronic devices 100-1 to 100-n, a first server 200, and a second server 300, and the respective components may be connected to each other via a network 10.

The network 10 may be implemented as any of various forms of wired/wireless communication networks, a broadcast communication network, an optical communication network, a cloud communication network, or the like, and the respective devices may be connected to each other without a separate medium, such as wireless fidelity (Wi-Fi), Bluetooth, or near field communication (NFC).

FIG. 1 shows the plurality of electronic devices. However, the plurality of electronic devices are not necessarily required to be used, and a single device may be used instead. As an example, the electronic device 100-1 to 100-n may be implemented in various forms of devices such as smartphones, tablets, game players, personal computers (PCs), laptop PCs, home servers, or kiosks, and may also be implemented in the form of home appliances using internet of things (IoT) functions.

A user may input various information by using the electronic device 100-1 to 100-n that the user uses. The input information may be stored in the electronic device 100-1 to 100-n itself, or may also be transmitted to and stored in an external device for reasons such as storage capacity and security. As shown in FIG. 1, the first server 200 may serve to store such information, and the second server 300 may serve to use some or all of the information stored in the first server 200.

Each of the electronic devices 100-1 to 100-n may homomorphically encrypt the input information and transmit a homomorphic ciphertext to the first server 200.

Each of the electronic devices 100-1 to 100-n may include an error, i.e., encryption noise calculated in a process of performing homomorphic encryption, in the ciphertext. In detail, the homomorphic ciphertext generated by each of the electronic devices 100-1 to 100-n may be generated in a form in which a result value including a message and an error value is restored if decrypted later using a secret key.

As an example, the homomorphic ciphertext generated by each of the electronic devices 100-1 to 100-n may be generated in a form that satisfies a following property if decrypted using the secret key.

[Equation 1]

$$Dec(ct, sk) = <ct, sk> = M+e(mod\ q)$$

Here, < and > indicate dot product operation (or usual inner product), ct indicates the ciphertext, sk indicates the secret key, M indicates a plaintext message, e indicates the encryption error value, and mod q indicates a modulus of the ciphertext. q needs to be selected to be larger than a result value M multiplied by a scaling factor $\Delta$ to the message. If an absolute value of the error value e is sufficiently smaller than M, a decryption value M+e of the ciphertext may be a value that may replace an original message by the same precision in significant figure operation. Among decrypted data, the error may be disposed on the least significant bit (LSB) side, and M may be disposed on the next least significant bit side.

If a size of the message is too small or too large, the size may be adjusted using the scaling factor. If the scaling factor is used, not only a message in an integer form but also a message in a real number form may be encrypted, and its usability may thus be greatly increased. In addition, the size of the message may be adjusted using the scaling factor to thus also adjust a size of an effective region, that is, a region where the messages exist in the ciphertext after the operation is performed.

In some embodiments, the modulus q of the ciphertext may be set and used in various forms. As an example, the modulus of the ciphertext may be set in a form of an exponential power $q=\Delta^L$ of the scaling factor $\Delta$. If $\Delta$ is 2, the modulus may be set to a value such as $q=2^{10}$.

In addition, the homomorphic ciphertext according to the present disclosure is described assuming that a fixed point is used. However, the homomorphic ciphertext may also be applied even in case of using a floating point.

Meanwhile, the homomorphic ciphertext generated by the electronic device 100 according to the present disclosure may be a ciphertext generated using a learning with errors (LWE) scheme. In detail, this type of ciphertext is intended to save communication resources in a process of transmitting the generated ciphertext, and in implementation, a module learning with errors (MLWE) scheme or a ring learning with errors (RLWE) scheme may be used instead of the LWE scheme. In addition, in the present disclosure, the homomorphic ciphertext may be generated using a method for generating only some components (information) included in the ciphertext instead of the general LWE or RLWE scheme.

The LWE scheme may be referred to as a single-message homomorphic encryption method, single-message homomorphic encryption, or the like. The RLWE scheme is a homomorphic encryption method that has a plurality of slots and may include the message in each slot. The RLWE scheme may be referred to as a multiple-message homomorphic encryption, CKKS homomorphic encryption, or the like. The MLWE scheme is a homomorphic encryption method that generalizes the LWE or RLWE scheme described above. In this regard, the LWE scheme may be viewed as a MLWE scheme that has rank k and dimension 1. That is, $LWE^k = MLWE^k_1$. The RLWE scheme may be viewed as an MLWE scheme that has rank 1 and dimension N. That is, $RLWE_N = MLWE^1_N$.

Hereinafter, for ease of description, the homomorphic ciphertext generated using a first scheme (LWE) is referred to as a first homomorphic ciphertext (or LWE ciphertext), the homomorphic ciphertext generated using a second scheme (RLWE) is referred to as a second homomorphic ciphertext (or RLWE ciphertext), and the homomorphic ciphertext generated using a third scheme (MLWE) is referred to as a third homomorphic ciphertext (or MLWE ciphertext).

In this way, the MLWE ciphertext may be viewed as a ciphertext generated using the encryption method that generalizes LWE or RLWE, and the above-described methods may be transformed through a transformation process. A specific transformation operation and the merging operation described above are described below.

The first server 200 may store the received homomorphic ciphertext in a ciphertext state without decrypting the ciphertext. Meanwhile, the first server 200 may store not only the homomorphic ciphertext encrypted using a single scheme, but also the homomorphic ciphertext encrypted using various schemes.

In this case, the first server 200 may perform the transformation operation on the homomorphic ciphertext encrypted using different schemes, or perform merging processing on the plurality of homomorphic ciphertexts into a single ciphertext.

The second server 300 may request a specific processing result for the homomorphic ciphertext from the first server 200. The first server 200 may perform a specific operation based on the request from the second server 300 and then transmit the result to the second server 300.

As an example, if ciphertexts ct1 and ct2 transmitted from two electronic devices 100-1 and 100-2 are stored in the first server 200, the second server 300 may request the first server 200 for a value acquired by combining information provided by the two electronic devices 100-1 and 100-2. The first server 200 may perform an operation for adding the two ciphertexts based on the request and then transmit a result value ct1 + ct2 to the second server 300.

Due to a property of the homomorphic ciphertext, the first server 200 may perform the operation without decrypting the ciphertext, and the result value may also be generated in a ciphertext form. In the present disclosure, the result value acquired from the operation is referred to as an operational result ciphertext.

The first server 200 may transmit the operational result ciphertext to the second server 300. The second server 300 may decrypt the received operational result ciphertext to thus acquire the operation result value of data included in each homomorphic ciphertext.

The first server 200 may perform the operation multiple times based on a user request. In this case, an approximate message weight in the operational result ciphertext acquired for each operation may be changed. The first server 200 may perform a bootstrapping operation if the approximate message weight exceeds a threshold. In this way, the first server 200 may perform an operation proves and, therefore, may also be referred to as an operation device.

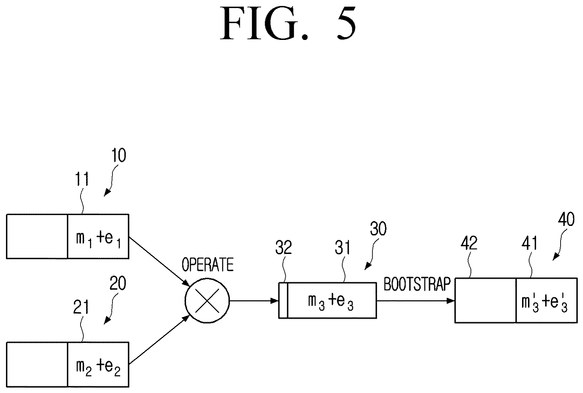

In detail, in Equation 1 above, if q is smaller than M, M+e(mod q) has a different value from M+e, thus making the decryption impossible. Therefore, a value of q needs to always be maintained larger than M. However, the value of q may be gradually decreased as the operation progresses. Therefore, an operation is needed to change the value of q to ensure that the value of q always remains greater than M, and this operation is referred to as the bootstrapping operation. As the bootstrapping operation is performed, the ciphertext may be made available for the operation again. A specific operation related to the bootstrapping is described below with reference to FIG. 5.

Meanwhile, FIG. 1 shows a case where the first electronic device and the second electronic device perform the encryption, and the second server performs the decryption. However, the present disclosure is not necessarily limited thereto.

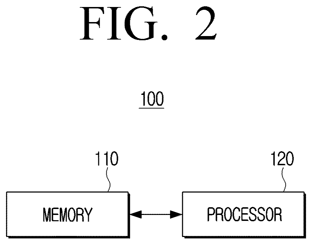

FIG. 2 is a block diagram showing a brief configuration of the electronic device according to an embodiment of the present disclosure.

Referring to FIG. 2, the electronic device 100 may include a memory 110 and a processor 120.

The memory 110 is a component for storing various instructions and/or software, data, or the like related to the generation and processing for operation of the homomorphic ciphertext described below, or an operating system (O/S) for driving the electronic device 100. The memory 110 may be implemented in any of various forms such as a random-access memory (RAM), a read-only memory (ROM), a flash memory, a hard disk drive (HDD), an external memory, or a memory card, and is not limited to any one.

The memory 110 may store the message to be encrypted. Here, the message may include various credit information, personal information, or the like quoted by the user, and may also be information related to a usage history, such as location information, internet usage time information, or the like used by the electronic device 100.

In addition, the memory 110 may store a public key. If the electronic device 100 is a device that directly generates the public key, the electronic device 100 may store not only the secret key, but also various parameters required for generating the public key and the secret key.

In addition, the memory 110 may store the homomorphic ciphertext generated in a process described below (e.g., merged homomorphic ciphertext or homomorphic ciphertext which is a result of the homomorphic operation). Here, the ciphertext stored in the memory 110 may be a ciphertext using the RLWE scheme scheme.

The processor 120 may control each component of the electronic device 100. The processor 120 may be configured as a single device, such as a central processing unit (CPU) or an application-specific integrated circuit (ASIC), or may be configured as a plurality of devices, such as central processing units (CPUs) and graphics processing units (GPUs).

The processor 120 may store the message to be transmitted in the memory 110 if the corresponding message is input. The processor 120 may homomorphically encrypt the message by using various set values and programs stored in the memory 110. In this case, the public key may be used.

The processor 120 may generate and use the public key required to perform the encryption on its own, or may receive the public key from the external device and use the same. As an example, the second server 300 performing the decryption may distribute the public key to other devices.

If the processor 120 generates the key on its own, the processor 120 may generate the public key by using the Ring-LWE scheme. To describe in detail, the processor 120 may first set the various parameters and rings and store the same in the memory 110. An example of the parameter may include a length of plaintext message bits, dimension k, rank k, a size of the public key or the secret key, or the like. The homomorphic ciphertext may have various formats, and the processor 120 may set the ring based on a ciphertext method according to a method set by the user or a predetermined method. For example, the homomorphic ciphertext method described above may be Cheon-Kim-Kim-Song (CKKS) scheme or the RLWE scheme.

The ring may be expressed by the following equation.

[Equation 2]

$$R = Z_q[X]/f(x)$$

Here, R indicates the ring, $Z_q$ indicates a coefficient, and f(x) indicates an N-th polynomial.

The Ring indicates a set of polynomials having predetermined coefficients, and indicates the set in which addition and multiplication are defined between elements and which is closed under the addition and multiplication. The Ring may be referred to as the ring.

As an example, the ring indicates a set of the N-th polynomials having the coefficient $Z_q$. In detail, if n is $\Phi(N)$, N indicates a polynomial which may be calculated as the remainder of dividing the polynomial by an N-th cyclotomic polynomial. (f(x)) indicates ideal of $Z_q[x]$ generated by f(x). The Euler totient function $\Phi(N)$ indicates the number of natural numbers that are coprime to N and smaller than N.

The ring used in the above-described MLWE may be expressed by Equation 3 below.

[Equation 3]

$$R_{q,N} = Z_q[X_{(N)}]/(X_{(N)}^N + 1)$$

Here, q indicates a modulus, k indicates a rank, and N indicates a dimension. Meanwhile, the above-described ring assumes MLWE, and in case of using LWE, N may be replaced with 1 and used, and in the RLWE scheme, k may be replaced with 1 and used.

If the ring is set, the processor 120 may calculate a secret key sk from the ring.

[Equation 4]

sk ← (1, s(x)), s(x) ∈ R

Here, s(x) indicates a random polynomial generated using a small coefficient.

If the ring and the secret key are selected, the processor 120 may calculate a first random polynomial (a(x)) from the ring. The first random polynomial may be expressed as follows.

[Equation 5]

a(x) ← R

In addition, the processor 120 may calculate the error. In detail, the processor 120 may extract the error from a discrete Gaussian distribution or a distribution having a statistical distance close thereto. This error may be expressed as follows.

[Equation 6]

$e(x) \leftarrow D^n_{\alpha q}$

If even the error is calculated, the processor 120 may calculate a second random polynomial by performing a modular operation on the error in the first random polynomial and the secret key. The second random polynomial may be expressed as follows.

[Equation 7]

b(x) = -a(x)s(x) + e(x)(mod q)

Finally, a public key pk may be set to include the first random polynomial and the second random polynomial as follows.

[Equation 8]

pk = (b(x), a(x))

Meanwhile, each content of Equations 4 to 8 described above may be an example of a case of using the CKKS scheme (i.e., RLWE scheme), and the above-described scheme may be modified to suit a corresponding scheme and used in case of using the LWE or MLWE scheme. In addition, the public key and the secret key may be generated using a scheme other than the scheme described above.

In addition, the processor 120 may generate the homomorphic ciphertext for the message. In detail, the processor 120 may generate the homomorphic ciphertext by applying the previously-generated public key to the message.

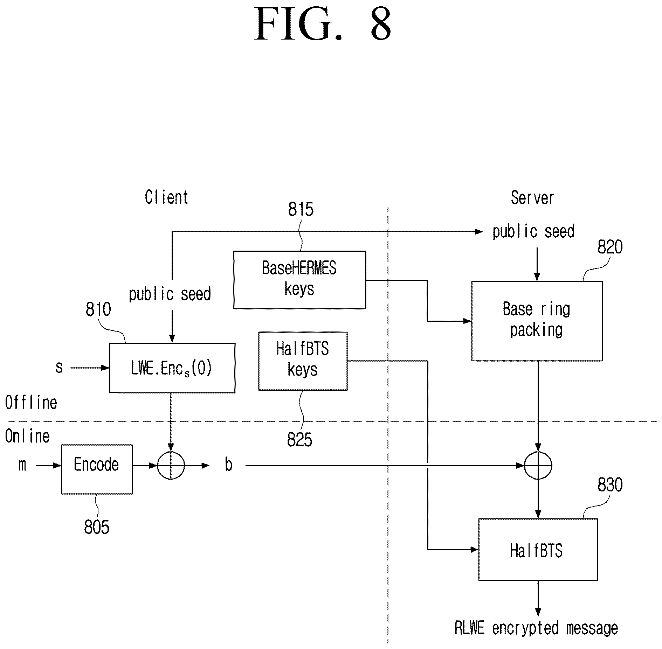

In addition, the processor 120 may generate the ciphertext to have a length corresponding to a size of the scaling factor. In addition, the processor 120 may also generate the ciphertext by including only elements that include only some components in a corresponding ciphertext form, instead of using the homomorphic ciphertext form generated using the general LWE or RLWE scheme. An example of this configuration is described below with reference to FIG. 8.

In addition, if the homomorphic ciphertext is generated, the processor 120 may store the homomorphic ciphertext in the memory 110, or control a communication device 130 to transmit the homomorphic ciphertext to another device based on the user request or a predetermined default command.

In addition, the processor 120 may transform the homomorphic ciphertext. For example, if there are various forms of homomorphic ciphertexts, the operations are unable to be performed together because the ciphertexts have different dimensions or different ranks.

Therefore, the processor 120 may transform the input homomorphic ciphertext or the homomorphic ciphertext to be processed for operation into an RLWE ciphertext having dimension N, an RLWE ciphertext having rank K, or an RLWE ciphertext having dimension N and rank K to cover all dimensions and all ranks, and perform the processing for operation by using the transformed ciphertext.

In addition, the processor 120 may merge the plurality of homomorphic ciphertexts. Here, the processor 120 may merge the homomorphic ciphertexts in various ways, and if the corresponding ciphertext is using the RLWE scheme, the plurality of homomorphic ciphertexts may be merged using a packing method.

If the plurality of homomorphic ciphertexts are the LWE ciphertexts, the processor 120 may perform the merging by viewing each of the plurality of first homomorphic ciphertexts as the homomorphic ciphertext having rank k and dimension 1, transforming each of the multiple dimensions into the third homomorphic ciphertext, and transforming the third homomorphic ciphertext into the second homomorphic ciphertext having rank 1 and dimension N.

The transformation process may be performed using two schemes: the first one uses the intermediate ciphertext (MLWE), and the second one merges the ciphertexts into a low-dimensional RLWE ciphertext through ring packing and ring switching, and then merges the ciphertext into a high-dimensional RLWE ciphertext.

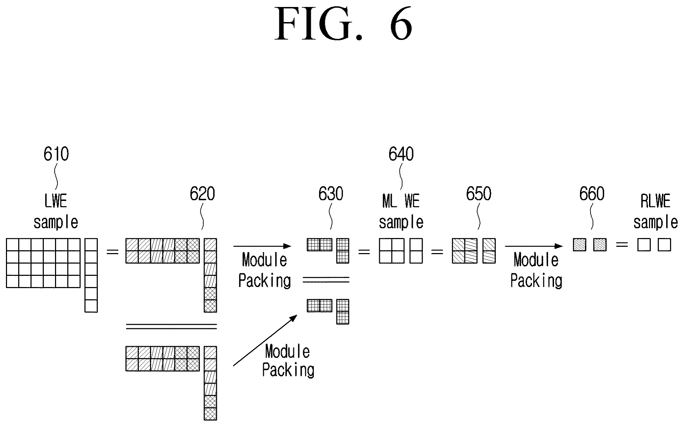

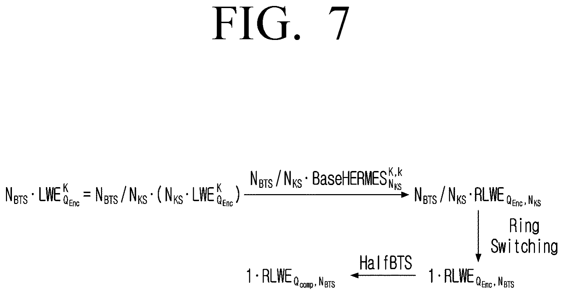

The first scheme is described with reference to FIG. 6, and the second scheme is described with reference to FIG. 7.

Meanwhile, if the operation is completed, the processor 120 may detect data in the effective region from operational result data. In detail, the processor 120 may perform rounding processing on the operational result data to detect the data in the effective region. The rounding processing indicates rounding off the message while the message is encrypted, and may alternatively be referred to as rescaling.

In detail, the processor 120 may remove a noise region by multiplying each component of the ciphertext by $\Delta^{-1}$, which is an inverse of the scaling factor, and rounding off the same. The noise region may be determined to correspond to the size of the scaling factor. As a result, the processor 120 may detect the message in the effective region excluding the noise region. The rounding processing may be performed while the message is encrypted, an additional error may thus occur. However, the size may be sufficiently small and thus be ignored.

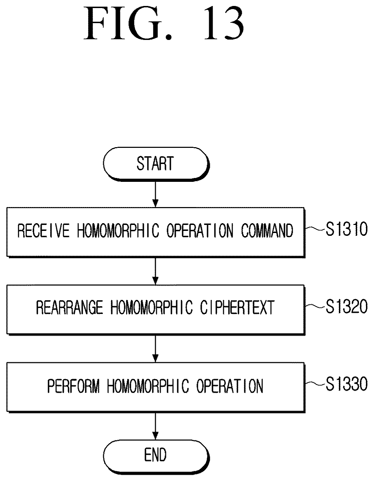

In addition, the processor 120 may perform an operation to recombine the merged homomorphic ciphertext if the homomorphic operation on the merged homomorphic ciphertext is input. For example, the merged homomorphic ciphertext may be decomposed into the plurality of first homomorphic ciphertexts, and only the ciphertexts used for the homomorphic operation among the decomposed first homomorphic ciphertexts may be used and merged into the second homomorphic ciphertext (i.e., RLWE ciphertext). Here, the processor 120 may generate the second homomorphic ciphertext to minimize a modulus up (ModUp) operation during an operational process. This operation is described in detail with reference to FIG. 13.

In addition, if a transmission command for a specific ciphertext in the merged homomorphic ciphertext is input, the processor 120 may decompose the merged homomorphic ciphertext into the first homomorphic ciphertext (i.e., LWE ciphertext) and transmit the first homomorphic ciphertext corresponding to the transmission command among the decomposed ciphertexts to a corresponding device.

In detail, if the message includes a plurality of message vectors, the processor 120 may transform the plurality of message vectors into a polynomial for encrypting the message vectors in parallel, then multiply the polynomial by the scaling factor, and use the public key to perform the homomorphic encryption. The processor 120 may thus generate the ciphertext in which the plurality of message vectors are packed.

In addition, the processor 120 may perform key switching on the homomorphic ciphertext. Here, the key switching assumes a case of the RLWE ciphertext, and RLWE key switching may include sub-steps such as ModUp, modulus down (ModDown), and multiplication switching (MultSwk). The key transformation may be performed using gadget decomposition and an intermediate integer.

ModUp: $R_{q,N} \rightarrow R_{qp,N}$, which is an operation that embeds polynomial input belonging to $R_{q,N}$ into $R_N$.

MultSwk: $R_{qp,N} \times R_{qp,N}^2 \rightarrow R_{qp,N}^2$ , which is an operation that receives a polynomial and a switching key, and performs Hadamard product for each degree N.

ModDown: $R_{qp,N}^2 \rightarrow R_{q,N}^2$ , which is an operation that receives the ciphertext and calculates an approximate value of p.

In addition, if the homomorphic ciphertext is required to be decrypted, the processor 120 may apply the secret key to the homomorphic ciphertext to thus generate a decrypted text in a polynomial form, and decode the decrypted text in the polynomial form to thus generate the message. Here, the generated message may include the error as mentioned in Equation 1 described above.

In addition, the processor 120 may perform the homomorphic operation (or general arithmetic operation) on the homomorphic ciphertext. In detail, the processor 120 may perform the operation such as addition or multiplication on the homomorphic ciphertext while maintaining its encrypted state. In detail, the processor 120 may process each of the homomorphic ciphertexts to be used in the operation by using a first function, perform the operation such as addition or multiplication between the homomorphic ciphertexts processed using the first function, and process the homomorphic ciphertexts, on which the operation is performed, by using a second function, which is an inverse function of the first function. The first-function processing and the second-function processing may use linear transformation technology in a bootstrapping process described below.

In addition, the processor 120 may perform the bootstrapping operation on the ciphertext if the approximate message weight in the operational result ciphertext exceeds the threshold. In detail, the processor 120 may generate the homomorphic ciphertext whose plaintext space is expanded by expanding a modulus of the operational result ciphertext, performing a first linear transformation on the homomorphic ciphertext whose modulus is expanded into the polynomial form, performing an approximation operation on the first homomorphic ciphertext, which is transformed into the polynomial form, by using a function set to approximate a modulated range of a plaintext, performing a second linear transformation on the second homomorphic ciphertext, on which the approximation operation is performed, into a homomorphic ciphertext form, and performing a subtraction operation by subtracting the second homomorphic ciphertext, on which the second linear transformation is performed, from the homomorphic ciphertext whose modulus is expanded.

As described above, the electronic device 100 according to an embodiment of the present disclosure may maximize storage efficiency by merging and storing the plurality of homomorphic ciphertexts, and increase transmission efficiency by transforming and transmitting the homomorphic ciphertext using a scheme for reducing transmission resources if the transmission is required. In addition, the electronic device 100 may also improve operational efficiency in recombining the homomorphic ciphertexts during the homomorphic operational process to improve the operational efficiency if the homomorphic operation is required.

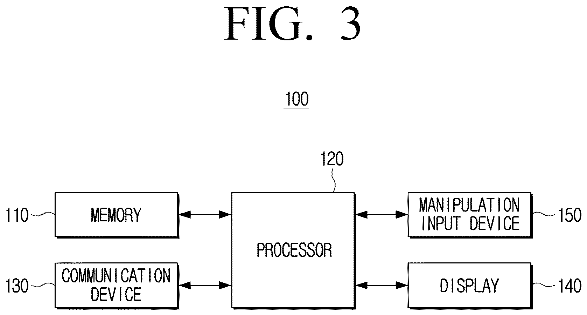

Meanwhile, only the brief components included in the electronic device 100 are shown and described hereinabove. However, in implementation, the electronic device 100 may include various additional components. A description of these components is provided below with reference to FIG. 3.

FIG. 3 is a block diagram showing a detailed configuration of the electronic device according to an embodiment of the present disclosure.

Referring to FIG. 3, the electronic device 100 according to the present disclosure may include the memory 110, the processor 120, a communication device 130, a display 140, and a manipulation input device 150.

The description describes the memory 110 with reference to FIG. 2, and thus omits its redundant description. In addition, the description also describes the processor 120 with reference to FIG. 2, and omits its contents provided with reference to FIG. 2, and only describes its functions added in FIG. 3.

The communication device 130 may connect the electronic device 100 to the external device (not shown), and may be connected to the external device not only via a local area network (LAN) or the internet, but also via a universal serial bus (USB) port or a wireless communication port (e.g., Wi-Fi 802.11a/b/g/n, NFC, or Bluetooth). The communication device 130 may also be referred to as a transceiver.

The communication device 130 may receive the public key from the external device, and transmit the public key generated by the electronic device 100 to the external device.

In addition, the communication device 130 may receive the message from the external device, and transmit the generated homomorphic ciphertext to the external device. Here, the homomorphic ciphertext transmitted or received may be the homomorphic ciphertext using the LWE scheme.

In addition, the communication device 130 may receive various parameters required for generating the ciphertext from the external device. Meanwhile, in implementation, the various parameters may be directly input from the user through the manipulation input device 150 described below.

The display 140 may display a user interface window for selection of functions supported by the electronic device 100. In detail, the display 140 may display the user interface window for the selection of various functions provided by the electronic device 100. The display 140 may be a monitor such as a liquid crystal display (LCD), a cathode ray tube (CRT), or an organic light-emitting diode (OLED), and may also be implemented as a touchscreen capable of simultaneously performing a function of the manipulation input device 150 described below.

The display 140 may display a message requesting input of the parameter required for generating the secret key or the public key. In addition, the display 140 may display a message for selecting a message which is an encryption target. Meanwhile, in implementation, the encryption target may be selected directly by the user or automatically selected. That is, the personal information or the like that requires the encryption may be set automatically even if the user does not directly select the message.

The manipulation input device 150 may receive a function selection command and a control command for a corresponding function of the electronic device 100 from the user. In detail, the manipulation input device 150 may receive the parameter required for generating the secret key or the public key from the user. In addition, the manipulation input device 150 may receive the message to be encrypted from the user.

In addition, the manipulation input device 150 may receive selection of the homomorphic ciphertexts (or the plaintexts) required to be used together among the plurality of homomorphic ciphertexts. Based on the selection command, the processor 120 may merge the plurality of homomorphic ciphertexts into a single homomorphic ciphertext.

In addition, the manipulation input device 150 may also receive the transmission command, a homomorphic operation command or the like for the homomorphic ciphertext.

If the processor 120 receives the parameters required for generating the secret key or the public key from the user, the processor 120 may generate a setting parameter based on the received parameter, and generate the secret key or the public key based on the generated setting parameter.

In addition, if it is necessary to generate the ciphertext for the message, the processor 120 may apply the public key to the message to thus generate the homomorphic ciphertext. In detail, the processor 120 may transform the message into the polynomial form and apply the public key to the message transformed into the polynomial form to thus generate the homomorphic ciphertext.

In addition, if it is necessary to decrypt the homomorphic ciphertext, the processor 120 may apply the secret key to the homomorphic ciphertext to thus generate the decrypted text in the polynomial form, and decode the decrypted text in the polynomial form to thus generate the message. Here, the generated message may include the error as mentioned in Equation 1 described above.

In addition, if it is necessary to perform the operation on the homomorphic ciphertext, the processor 120 may perform the addition or multiplication operation on the plurality of homomorphic ciphertexts requested by the user.

As described above, the electronic device 100 according to this embodiment may generate the homomorphic ciphertext for the message, thus improving the stability of the message even if the operation is required. In addition, the generated homomorphic ciphertext may include the error, thus maintaining stable security even for biometric information or the like that requires high security.

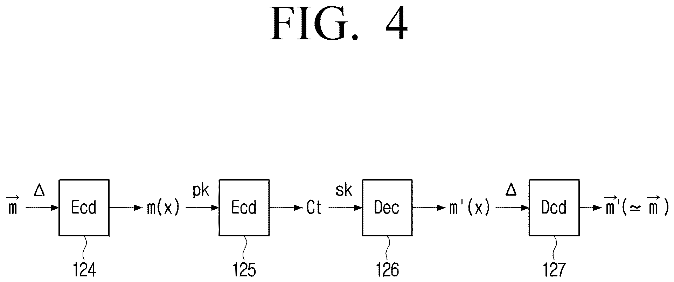

FIG. 4 is a diagram for describing generation and decryption operations on the homomorphic ciphertext.

Referring to FIG. 4, an encoding module 124 may receive the message and the scaling factor, and reflect the scaling factor to the message, thereby transforming the message into the polynomial form.

In detail, the encoding module 124 may output the message as a polynomial, as expressed in Equation 9 below, if the encoding module 124 receives the message in the polynomial form and the scaling factor that is greater than or equal to 1.

[Equation 9]

$$m(X) = \Upsilon^{-1} \left( \lfloor \triangle \cdot \vec{m} \rceil_{\Upsilon(R')} \right) \in R'$$

Here, m(x) indicates the message in the polynomial form, and R indicates the ring. This type of transformation may be referred to as the linear transformation.

In addition, an encryption module 125 may receive the message in the polynomial form and reflect the public key to the received message, thereby generating the homomorphic ciphertext. In detail, the encryption module 125 may generate the homomorphic ciphertext based on Equation 10 below.

[Equation 10]

$$\upsilon \cdot pk + (m + e_0, e_1)(\mathrm{mod} q_L)$$

Here, $\nu$ indicates a selected element, $e_0$ or $e_1$ indicates a selected error value, and $q_L$ indicates the modulus.

Meanwhile, in implementation, the encryption module 125 may generate only a partial region as expressed in Equation 10 described above, that is, the encryption module 125 may use the ciphertext in a form as expressed in Equation 11 below.

$$[\text{Equation 11}]$$

$$b = -<\vec{a}, \vec{s}> + m + e = (-a_0 s_0 + ... + -a_{k-1} s_{k-1}) + m + e$$

Here, $s=(s_0,...,s_{k-1})$ indicates the secret key, m indicates the message, and e indicates the error.

A decryption module 126 may receive the ciphertext and the secret key to thus decrypt the ciphertext, thereby outputting the message including the error. Such an operation of the decryption module may be performed using a scheme corresponding to the same scheme as the encryption scheme.

Meanwhile, the message output by the decryption module 126 may be the message in the polynomial form, and a decoding module 127 may thus finally output the message based on the message output by the decryption module 126 and the scaling factor.

FIG. 5 is a diagram for describing the bootstrapping operation according to the present disclosure.

In detail, FIG. 5 shows the operation and bootstrapping process for two homomorphic ciphertexts 10 and 20. The term "bootstrapping" may also be expressed as bootstrapping or plaintext space expansion.

The homomorphic ciphertexts 10 and 20 may include approximate message regions 11 and 21, respectively. The approximate message regions 11 and 21 may include the message and errors $m_1+e_1$ and $m_2+e_2$ together.

The electronic device 100 may perform a specific operation using the two homomorphic ciphertexts 10 and 20 as input values.

An operational result ciphertext 30 may include an approximate message region 31 including an operation result $m_3+e_3$ of each approximate message. As an operation result becomes larger than the input value, the approximate message region may also become larger, thus reducing a remaining plaintext space 32. If this operation is performed multiple times, the remaining plaintext space 32 may eventually disappear or become smaller than a limit, thus making the operation impossible. If it is determined that this state is reached, the electronic device 100 may perform the bootstrapping operation.

It may be seen that in a bootstrapped ciphertext 40, an approximate message region 41 is constant and a plaintext space 42 is expanded.

In this way, the bootstrapping method may expand the plaintext space, thereby enabling continuous processing for operation to be performed on the homomorphic ciphertext.

Meanwhile, this bootstrapping method may enable not only the expansion of the plaintext space but also the modification of the modulus during the process. In this regard, the present disclosure may utilize the bootstrapping method in the process of merging the plurality of homomorphic ciphertexts. A method of using such transformation may be described with reference to FIG. 7.

Hereinafter, the description describes the method of transforming the LWE ciphertext into the RLWE ciphertext.

First, the description may describe whether such transformation is necessary.

The LWE ciphertext has a feature of low delay while being able to store only a single message. On the other hand, a high-speed operation may be performed on the RLWE ciphertext if the message includes the plurality of messages.

In this regard, it may be seen that the RLWE ciphertext is more suitable for the data storage and operational processes, and the LWE ciphertext is efficient for the data transmission process or the like.

Therefore, in a system for transmitting and receiving the homomorphic ciphertext, the efficiency of an entire system may be improved if the data may be transmitted, processed for operation, and stored using the ciphertext suitable for each scheme by performing the transformation operation between two ciphertexts. An implementation example of this case may be described below with reference to FIG. 8.

For such an operation, the transformation between the ciphertext schemes described above needs to be possible, and the above-described transformation may need to require fewer resources (time) than a case where the ciphertext schemes are used without such transformation.

In this regard, hereinafter, the description describe a method for transforming the LWE ciphertext into the RLWE ciphertext and the efficiency of the operation according to the present disclosure secured by performing this method.

The transformation operation according to the present disclosure may be performed in two schemes. Hereinafter, a first scheme may be described first with reference to FIG. 6, and a second scheme may be described with reference to FIG. 7.

FIG. 6 is a diagram for describing the merging operation on the homomorphic ciphertexts according to an embodiment of the present disclosure. The merging operation on the homomorphic ciphertexts may be referred to as scheme transformation of the ciphertexts.

First, a scheme for transforming the plurality of LWE ciphertexts into a single RLWE ciphertext may be referred to as BaseHERMES hereinafter. The first scheme may be divided into a step for generating the intermediate ciphertext (i.e., MLWE) and an operation for decomposing its result.

The operation may be expressed by the following equation:

[Equation 12]

$$N \cdot LWE_{Q_{Enc}}^{K} \rightarrow k \cdot MLWE_{Q_{Enc},N/k}^{k} \rightarrow 1 \cdot RLWE_{Q_{Enc},N}$$

Here, LWE indicates the ciphertext using the LWE scheme, MLWE indicates the ciphertext using the MLWE scheme, RLWE indicates the ciphertext using the RLWE scheme, N indicates the number of ciphertexts using the LWE scheme, and k indicates an integer less than N.

The first operation of this type is intended to perform k parallel operations (i.e., $ModPack_N^{K,N,k}$), and the second step may be performed via $ModPack_N^{k,k,1}$. Equation 12 described above may be expressed by the following equation using a ModPack operator.

[Equation 13]

$$BaseHERMES_N^{k,\{k\}} = ModPack_N^{k,k,1} \bigcirc (k \cdot ModPack_N^{K,N,k})$$

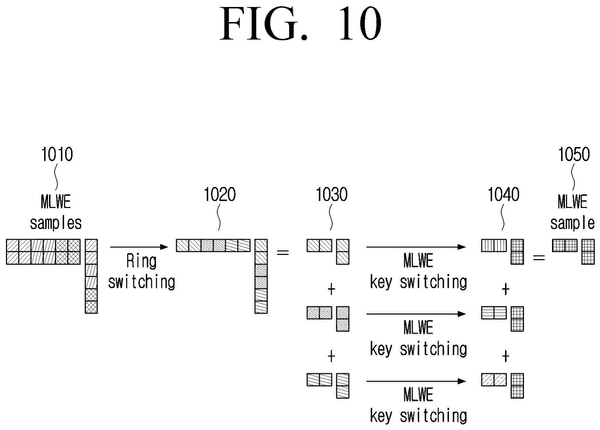

Here, BaseHERMES indicates an operator that uses the MLWE ciphertext as the intermediate ciphertext and makes the LWE ciphertext into the single RLWE ciphertext, ModPack indicates an operator that merges the plurality of ciphertexts, K indicates a rank of LWE, k indicates an intermediate rank, and N indicates a dimension of RLWE. A detailed operation of ModPack may be described below with reference to FIG. 10.

Referring to FIG. 6, in the first step, a plurality of LWE homomorphic ciphertexts 610 may be divided into two groups 620, and individual module packing may be applied to each group.

Through this process, two MLWE homomorphic ciphertexts may be generated. Here, the grouping and an arrangement order may be performed arbitrarily. However, a position of the corresponding LWE ciphertext (i.e., position of a storage slot in RLWE) may be determined based on the grouping and the arrangement order.

Meanwhile, Table 1 below compares the respective costs and sizes of switching keys for the two transformation schemes according to the present disclosure.

[Table 1]

| Method | | ModUp $O(N \log N)$ | ModDown $O(N \log N)$ | HadamardMult $O(N)$ | SwitchingKey $O(N \log(Q_{KS}))$ |
|---|---|---|---|---|---|
| BaseHERMES$_N^{k,\emptyset}$ (column method) | | $K$ | $1$ | $2K$ | $K$ |
| BaseHERMES$_N^{k,\{k\}}$ (single midpoint) | Step 1 | $K$ | $k$ | $2K$ | $K/k$ |
| | Step 2 | $k$ | $1$ | $2k$ | $k$ |
| | Total | $K + k$ | $k + 1$ | $2(K + k)$ | $K/k + k$ |

Referring to Table 1, switching complexity may be $O(N \log(Q_{ks}))$ (where $Q_{ks}$ indicates a modulus of an N-degree RLWE ciphertext), and in general, the number of switching keys for minimizing the number of k may be $\sqrt{k}$. Accordingly, k may be set to a value corresponding to a power of 2. In addition, Table 2 below compares the main costs N of the two transformation schemes.

[Table 2]

| Method | | ModUp $O(N \log N)$ | ModDown $O(N \log N)$ | HadamardMult $O(N)$ | SwitchingKey $O(N \log(Q_{KS}))$ |
|---|---|---|---|---|---|
| BaseHERMES$_N^{N,0}$ (column method) | | $N$ | 1 | $2N$ | $N$ |
| BaseHERMES$_N^{N,\sqrt{N}}$ (single midpoint) | Step 1 | $N$ | $\sqrt{N}$ | $2N$ | $\sqrt{N}$ |
| | Step 2 | $\sqrt{N}$ | 1 | $2\sqrt{N}$ | $\sqrt{N}$ |
| | Total | $N + \sqrt{N}$ | $\sqrt{N} + 1$ | $2(N + \sqrt{N})$ | $2\sqrt{N}$ |

For reference, a difference in computational complexity may be ignored considering the main cost of ModUp. However, it may be confirmed that the cost in the switching key is greatly reduced to 2√N in case of using the scheme shown in FIG. 6.

Considering this point, it may be confirmed that the number of switching keys may be reduced as more midpoints of MLWE are taken.

Therefore, the above-described first step may be performed by being divided into a plurality of steps as follows. In this case, N = k0 > k1 > ... > kt > kt+1 = 1.

[Equation 14]

$$N \cdot LWE_{Q_{Enc}}^{K} \rightarrow k_1 \cdot MLWE_{Q_{Enc},N/k_1}^{k_1} \rightarrow \cdots \rightarrow k_t \cdot MLWE_{Q_{Enc},N/k_t}^{k_t} \rightarrow 1 \cdot RLWE_{Q_{Enc},N}$$

The operation expressed by Equation 14 may be expressed as follows using the ModPack operator used in the present disclosure.

[Equation 15]

$$BaseHERMES_N^{K,k} = (k_{t+1} \cdot ModPack_N^{k_t,k_t,k_{t+1}}) \bigcirc (k_t \cdot ModPack_N^{k_{t-1},k_{t-1},k_t}) \bigcirc \cdots (k_2 \cdot ModPack_N^{k_1,k_1,k_2}) \cdots (k_1 \cdot ModPack_N^{K,k_0,k_1})$$

In this way, the key size may be greatly reduced if the first step is subdivided into several steps and performed.

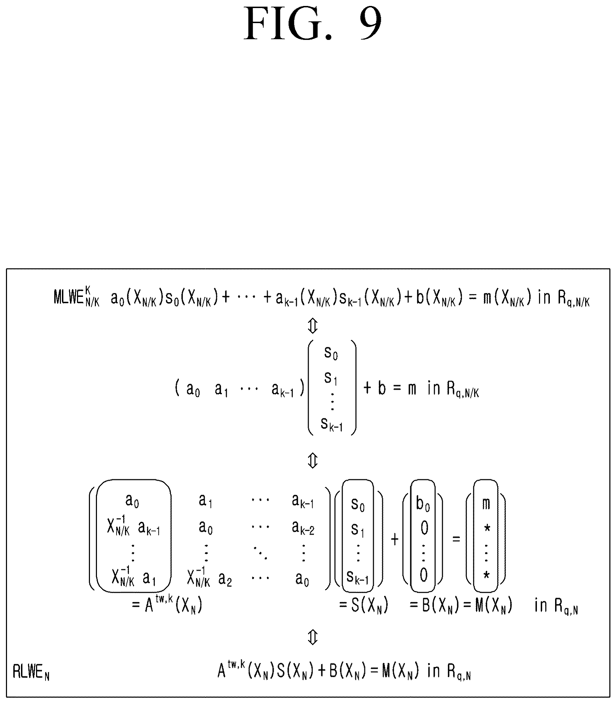

Considering this point, referring back to the operation shown in FIG. 6, a final MLWE ciphertext 660 may be transformed into the RLWE ciphertext if the single MLWE ciphertext 660 is finally generated by the repeated packing operations (620->630 and 650->660) described above. Such an operation may be referred to as an MLWE extraction operation. A detailed extraction operation may be described below with reference to FIG. 9.

Hereinabove, the operation for merging intermediate results, that is, using MLWE, is performed. However, in implementation, the merging process may also be performed without using MLWE. A description of this configuration is provided below with reference to FIG. 7.

FIG. 7 is a diagram for describing the merging operation on the homomorphic ciphertexts according to another embodiment of the present disclosure. In detail, as the merging operation on the homomorphic ciphertexts according to a second embodiment, a second operation may use a scheme for generating the single RLWE ciphertext by packing the LWE ciphertext directly without using the intermediate ciphertext (i.e., MLWE).

First, N ciphertexts LWE may be divided into a plurality of groups. In addition, the RLWE homomorphic ciphertext having $N_{ks}$ dimension may be generated for each group. In detail, this operation may be expressed by Equation 16.

[Equation 16]

$$N \cdot LWE_q^k \xrightarrow{Base\ ring\ pack} N/n \cdot RLWE_{q,t}$$

Here, LWE indicates the ciphertext using the LWE scheme, RLWE indicates the ciphertext using the RLWE scheme, N indicates the number of LWE ciphertexts, k indicates a rank of the LWE ciphertext, and q indicates a modulus of the ring.

In this way, an operation of combining the plurality of LWE homomorphic ciphertexts into the single homomorphic ciphertext using the RLWE scheme may be referred to as ring packing, and this ring packing refers to packing a ciphertext having a small modulus q into the RLWE ciphertext having dimension n lower than a dimension used in the bootstrapping process.

In addition, the generated N/N$_{ks}$ RLWE homomorphic ciphertexts may be ring-switched to thus generate the single RLWE ciphertext. This operation may be expressed by Equation 17.

[Equation 17]

$$N/n \cdot RLWE_{q,n} \xrightarrow{Ring\ switch} 1 \cdot RLWE_{q,N}$$

The ring switching described above is intended to transform the dimensions of the RLWE ciphertexts by using a ring switching map $R_{q,N}^{k}$. In detail, k RLWE ciphertexts, each having dimension N/k encrypted using a secret key s, may be coupled to acquire the single RLWE ciphertext having dimension N.

For example, if the given k ciphertexts have a form $(a_j, b_j = -a_j s + m_j)$, the homomorphic ciphertext having the synthesized dimension N may be expressed as $A, B = -A\tilde{s} + M$ (here,

$$A = \sum_j \widetilde{a_j} X^j_{(N)}, B = \sum_j \widetilde{b_j} X^j_{(N)}, M = \sum_j \widetilde{m_j} X^j_{(N)}$$

).

That is, a secret key ($\tilde{s}$) that comes from a low dimension may be replaced through key switching, and through that process, the corresponding ciphertext may become a ciphertext having high-dimensional stability and may be operated on in a high dimension.

Therefore, if the minimum dimension where the key switching is possible is $N_0$ (generally, 4096), the following coupling algorithm may be considered.

[Equation 18]

$$N \times LWE^k \to N/N_0 \cdot RLWE_{N_c} \to 1 \cdot RLWE_N$$

Here, N indicates the number of LWEs, and $N_0$ indicates an intermediate value smaller than N.

That is, the given LWE ciphertexts may be coupled into lower-dimensional RLWE ciphertexts, and then coupled into higher-dimensional RLWE ciphertexts. Time complexity of an assembly algorithm and a capacity of the switching key may depend on the dimension of RLWE. Therefore, the efficiency may be improved by performing the coupling while lowering the dimension of RLWE as much as possible. In addition, there is no cost for performing the coupling from RLWE to RLWE (i.e., there is no key switching process), the coupling may be performed very quickly.

A transformed bootstrapping may then be performed on the corresponding homomorphic ciphertext. This operation may be expressed by Equation 19.

[Equation 19]

$$1 \cdot RLWE_{q,N} \xrightarrow{HalfBTS} 1 \cdot RLWE_{Q,N}$$

This bootstrapping may be an operation for transforming the modulus of the homomorphic ciphertext generated in the previous process from $_{q,N}$ to $_{Q,N}$. Meanwhile, the plurality of ciphertexts are merged stepwise hereinabove, which is intended to greatly reduce the computation and memory cost of a packing algorithm. In detail, if a large ring packing is divided into small ring packings and processed, a processing speed and the key size may be improved. That is, using a ring of size N/n in n-degree rather than performing a single packing having a large N-degree may result in a faster operational speed and a much smaller ring size.

Meanwhile, as described above, a message value in the transformation process may be included in a coefficient, thus omitting the linear transformation operation for transforming a slot value into the coefficient in the bootstrapping used in the process.

FIG. 8 is a diagram for describing transmission and reception operations of the homomorphic ciphertext according to the present disclosure.

A first reason for using the transformation operation in the present disclosure is to save computation resources and communication resources in the process of transmitting the homomorphic ciphertext from the electronic device 100 (or client) to a server 200.

In detail, the homomorphic ciphertext using the RLWE scheme described above has a large ciphertext size, which is not advantageous for ciphertext transmission.

In addition, the homomorphic ciphertext using the RLWE scheme has low granularity. For example, if the ciphertext using the RLWE scheme has thousands of text slots, the client may need to wait for the transmission of the ciphertext using the RLWE scheme, that is, for all the corresponding slots to be filled. In this case, a very large ciphertext may be generated as a result. Therefore, in the present disclosure, the LWE homomorphic ciphertext (or small-sized MLWE) may be used in the transmission of the ciphertext.

Referring to FIG. 8, the system for transmitting and receiving the homomorphic ciphertext may include the client and the server.

The client may transmit encrypted data in an LWE format or a smaller MLWE format to achieve high granularity, may implicitly express most of the ciphertexts by using an expandable output format function (XOF) in a public seed, and achieve low ciphertext expansion.

For example, the client may be the electronic device shown in FIG. 1, and include an encoder 805, a matrix module 810, and memories 815 and 825 for storing a key for the homomorphic encryption.

The matrix module 810 may generate a random matrix included in the public key by applying a random matrix sampler function to a seed value included in the public key.

The encoder 805 may be a device for receiving the message and using the public key to generate the homomorphic ciphertext in the LWE format for the received message. The homomorphic ciphertext in the LWE format generated in this way may be transmitted to the server. Here, the encoder 805 may perform encoding on the input message by using the random matrix generated by the matrix module.

The memories 815 and 825 may store a key (BaseHERMES key) used for the ring packing and operation keys (HalfBTS keys).

The server may use the received ciphertext to generate a fully homomorphic encryption (FHE) ciphertext. The method according to the present disclosure described above may directly encrypt the approximation of a real number for an LWE symmetric cipher, thus bypassing the costly Brakerski-Fan-Vercauteren (BFV)/ Brakerski-Gentry-Vaikuntanathan (BGV) step in a conventional scheme. Therefore, the efficiency of the method according to the present disclosure may greatly reduce an overhead on the server compared to the CKKS scheme.

The server may include a ring packing module 820 and a bootstrapping module 830.

The ring packing module 820 may pre-calculate the random matrix to be used in the packing operation by using the public seed. In detail, using the XOF of the public seed may enable a lot of operation margin. For example, part "a" of LWE (or MLWE) may be used in many regions in the homomorphic ciphertext (e.g., b = <a, s>+m, a). Here, "a" may be pre-computed using the public seed.

Therefore, if the client pre-computes "a", the client may only need to perform an operation such as $b=\hat{b}+m$ in the ciphertext generation process in real time, and accordingly, the client may only need to transmit "b", on which the operation is performed, thereby reducing the communication resources.

Here, the client may transmit a result computed using the following scheme instead of "b" described above.

[Equation 20]

$$\lfloor \frac{2^{\hat{p}}}{\triangle} \cdot b \rfloor = \lfloor \frac{2^{\hat{p}}}{\triangle} \cdot (\hat{b}+m) \rfloor \approx \frac{2^{\hat{p}}}{\triangle} \cdot \hat{b} + \lfloor (\frac{2^{\hat{p}}}{\triangle}) \cdot m \rfloor$$

Here, $\hat{p}$ indicates operation precision and m indicates the message.

In this case, the server may scale up the received $\lfloor \frac{2^{\hat{p}}}{\triangle} \cdot b \rfloor$ to $\triangle/2^p$ and use the same.

In addition, the server may pre-compute a part of the (M)LWE ciphertext by using the seed described above. In detail, the server may pre-perform a basic ring packing for a temporary LWE ciphertext (0, a) and acquire a precomputed RLWE ciphertext $(\hat{B}(X), A(X))$.

Therefore, if the server receives the data (i.e., "b") encoded from the client, the server may properly dispose "b" into the temporary LWE ciphertext previously generated by the ring packing module 820 to finally generate the homomorphic ciphertext. Here, the generated ciphertext may have the LWE format or the MLWE format.

The bootstrapping module 830 may be a module that performs the bootstrapping operation on the finally-generated homomorphic ciphertext. In detail, according to the present disclosure, the message may be stored in coefficient during the packing and operation described above, and the linear transformation process for transforming the slot into the coefficient by using the general bootstrapping method may use halfBTS, which includes the omitted remaining steps.

A result of comparing a case of using such a scheme with the conventional scheme is shown in Table 3 below.

[Table 3]

| Scheme | N | n | Latency (s) | Expansion ratio | Mean precision |
|---|---|---|---|---|---|
| RtF-HERA [CHK+21] | $2^{16}$ | 16 | 112 | 1.21 | 19.1 |
| RtF-Rubato [HKL+22] | | 64 | 106 | 1.26 | 18.9 |
| | | 36 | 88.4 | 1.26 | 18.9 |
| | | 16 | 71.1 | 1.31 | 18.8 |
| Ours | | 64 | 25.8 | 1.58 | 23.0 |
| | | 32 | 26.1 | 1.58 | 23.0 |
| | | 16 | 25.7 | 1.58 | 23.0 |
| | | 1 | 30.9 | 1.58 | 23.0 |

Referring to Table 3, it may be confirmed that the scheme according to the present disclosure greatly improves transformation time (latency) compared to the conventional scheme.

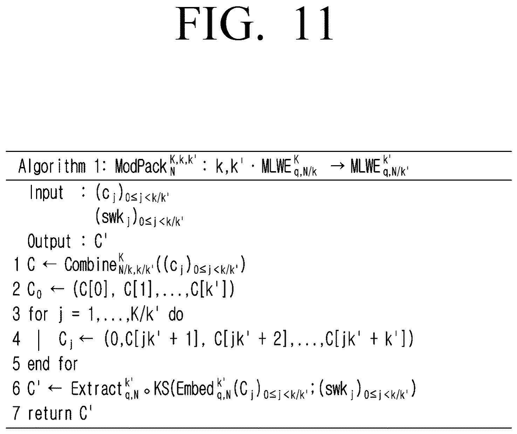

FIGS. 9 and 11 are diagrams for describing the ciphertext merging operation if the MLWE ciphertext is used as the intermediate ciphertext.

The transformation operation on the homomorphic ciphertext below uses a new ring packing method, and intuitively, the operations below use a block scheme. For example, the ring packing may be seen as an example of the multiplication of a plaintext matrix and a ciphertext vector. The description below describe an algorithm of the merging operation as a scheme for storing "C", which is the plaintext matrix.

The column, row, and diagonal schemes in a matrix may be viewed as the storage of the column, row, and diagonal schemes for "C". For example, considering sub-blocks of "C", "C" may be seen as a matrix of blocks included in $N_{ks}$.

A size of each sub-block needs to be greater than or equal to $N_{ks}$ for security, and may be less than or equal to $N_{ks}$ for efficiency. In this regard, module packing is intended to combine the respective rows of blocks into a single block. Through this operation, a width of "C" may be reduced. This process may be repeated to finally reduce "C" to a single column corresponding to an RLWE instance.

Meanwhile, in the present disclosure, the ciphertext having module-LWE (MLWE) format, which generalizes LWE and RLWE, may be used to store the blocks generated in the above-described process.

The module packing may be broadly divided into two steps. The first step is to store the LWE instances in the MLWE format and merge the same into the MLWE format having low K. The second step is to change the packed MLWE in the MLWE format, which is the same as the RLWE format, having rank 1.

Each step may include the module packing having √K basic switching keys, which may reduce an entire key size from K to 2√K, compared to the scheme described above. Here, K may be the dimension (or number) of the LWE ciphertexts.

The module packing may be expressed as a generalization of the ring packing. In this regard, some of general ring packing techniques may be used in the same way. However, a conventional ring packing is a technique applied to RLWE, and it may thus be difficult to apply the technique of the corresponding operation as it is to MLWE. Therefore, hereinafter, the description describes a new ring packing method applicable to the MLWE format.

Hereinafter, for ease of description, it is assumed that an output modulus is $Q_{Enc}$ and an RLWE degree is the lowest. In addition, it is assumed that each rank or degree N, k, ℓ, n, k', or d $k_i$ is a power of 2 except for dimension k of the input LWE.

The MLWE format used in the present disclosure may be expressed as $MLWE^k_{q,n}$ . Here, k indicates the rank, q indicates the modulus, and n indicates the degree.

The MLWE may be a generalization of LWE and RLWE as described above, and may satisfy $MLWE^k_{q,1} = LWE^k_q$ and $MLWE^1_{q,n} = RLWE_{q,n}$ .

Hereinafter, the description describes ring switching in MLWE and the key switching, which are basic operations of ModPack.

First, the ring switching in MLWE may be expressed by the following equation.

[Equation 21]

$$c'[t] = (\pi_{q,nl}^{l})^{-1}((c_j[t])_{0 \le j < l})$$

Here, c indicates an original ciphertext, c' indicates a ring-switched ciphertext, $\ell$, k, or n indicates a power of 2, and $(c_j)_{0 \le j < \ell}$. In addition, s indicates the secret key, k indicates the rank, and n indicates the degree.

The MLWE ciphertext c' may have rank k and degree $n\ell$.

Next, the description describes the key switching. The key switching may include the following three steps.

1. Embed the input MLWE ciphertext have the same dimension as the RLWE ciphertext or a higher degree than the RLWE ciphertext.
2. Switch a key of the RLWE ciphertext.
3. Extract the MLWE ciphertext having effective data from the RLWE ciphertext.

In general, the MLWE ciphertext may be viewed as a higher-level MLWE ciphertext having the same dimension. From this viewpoint, as shown in FIG. 9, the plaintext of a higher-degree MLWE ciphertext may include data of a lower degree, and the remaining plaintext slots may be filled with random data. In addition, a lower-degree MLWE ciphertext may be extracted from the higher-degree MLWE ciphertext.

Such embedding operation may be expressed by Equation 22 below.

[Equation 22]

$$Embed_{q,N}^{k}(b, a) = (\iota_{q,N}^{k}(b), (\pi_{q,N}^{k})^{-1}(a^{tw}))$$

Here, Embed indicates the embedding operator described above, k indicates the rank, and q and N indicate the moduli.

Here, if (b, a) is represented as data of the MLWE scheme described above, the embedding operation may be expressed by Equation 23 below.

[Equation 23]

$$Embed_{q,N}^{k}(MLWE_{q,N/k}^{k}.Enc_s(m)) = RLWE_{q,N}.Enc_{(\pi_{q,N}^{k})^{-1}(s)}(M)$$

Here, m or M indicates the message.

The MLWE extraction operation may be an operation for extracting a specific degree and rank from the MLWE ciphertext, which may be expressed by Equation 24 below.

[Equation 24]

$$Extract_{q,N}^{k}(B, A) = (\varepsilon_{q,N}^{k}(B), (\pi_{q,N}^{k}(A))^{(tw,k)^{-1}})$$

Here, Extract indicates an operator that performs the extraction operation described above, and (B, A) indicates a component in the homomorphic ciphertext using the RLWE scheme.

If expressed in the RLWE format described above, Equation 24 may be transformed and expressed as follows.

[Equation 25]

$$Extract_{q,N}^{k}(RLWE_{q,N}.Enc_s(m)) = MLWE_{q,N/k}^{k}.Enc_{\iota_{q,N}^{k}(s)}(\varepsilon_{q,N}^{k}(m))$$

Hereinafter, the description describes in more detail the ModPack operation, that is, the operation of merging the plurality of MLWEs.

According to the present disclosure, $ModPack_N^{K,k,k'}$ may be considered to perform an operation as expressed in Equation 26 below. That is, $ModPack_N^{K,k,k'}$ may enable the transformation of the plurality of MLWE ciphertexts into the single MLWE ciphertext.

[Equation 26]

$$k/k' \cdot MLWE_{q,N/k}^{K} \rightarrow MLWE_{q,N/k'}^{k'}$$

Here, K indicates a rank of the input MLWE ciphertext. The degrees of the input ciphertext and the output ciphertext are N/k and N/k', respectively. For example, there are d plaintext slots in a d-degree MLWE ciphertext, and the number of input MLWE ciphertexts may need to be (N/k')/(N/k) = k/k'.

It is assumed that s indicates the secret key of $MLWE_{q,N/k}^{K}$ and s' indicates the secret key of $MLWE_{q,N/k'}^{k'}$. In this case, a vector of dimension K may be seen as a concatenation K/k' vectors of dimension k'. Accordingly, $s = (\check{s}_0, \check{s}_1, \cdots, \check{s}_{K/k'-1})$ with $\check{s}_j \in R_{q,N/k}^{k'}$.

In this regard, as shown in FIG. 10, $ModPack_N^{K,k,k'}$ may include a coupling operation as expressed in Equation 27 below, a dividing operation as expressed in Equation 28, and the key switching operation as expressed in Equation 29.

[Equation 27]

$$C \leftarrow Combine_{N/k,k/k}^{K}((c_j)_{0 \le j < k/k'})$$

Here, "C" indicates a merged result, which may be expressed as $MLWE_{N/k'}^{K}$. In addition, $c_j$ indicates an individual ciphertext before being merged. The message on which this process is performed may be $m' = (\pi_{q,N/k'}^{k/k'})^{-1}(m_0, \cdots, m_{k/k'-1}) \in R_{q,N/k'}$.

If the merged result in this way is referred to as $C = (C[t])_{0 \le t < K}$, "C" may be divided into a plurality of parts expressed as $C_j$ as in the following Equation 28.

[Equation 28]

$$C_j = (0, C[jk'+1], C[jk'+2], \cdots, C[jk'+k'])$$

Here, $j$ indicates a natural number other than 0, and their sum may be decrypted to m' as described above.
If it is assumed that the encryption is performed using $s_3$ for each $C_j$, that is, the switching is performed using the switching key, the following operation as expressed in Equation 29 may be performed.

[Equation 29]

$$C' = Extrack_{q,N}^{k'} \bigcirc KS(Embed_{q,N}^{k'}(C_j)_{0 \le j < K/k'}; (swk_j)_{0 \le j < K/k'})$$

The final output C' indicates the homomorphic encryption of m' using the secret key s', and may have rank k' and degree N/k'.

Meanwhile, $ModPack_N^{K,k,k'}$ may be configured to perform ModUp K/k' times, ModDown once, and Hadamard product 2K/k' times. All the keys may be configured as K/k' basic conversion keys.

ModUp and ModDown may involve an O(N logN) integer operation because N-degree number theoretic transform (NTT)dominates, and Hadamard product may have O(N) complexity. In addition, a size of the switching key may be 2N log(qp) because the switching key is the N-degree RLWE ciphertext of modulus qp.

In addition, $ModPack_N^{N,N,1}$ is the column scheme described above, and the ModPack operation described hereinabove may be considered as a generalization of the column scheme described above.

If this operation is organized with reference to FIG. 11, the plurality of LWEs may first be transformed into the MLWE format (1010).

In addition, the plurality of ciphertexts using the MLWE scheme may be ring-switched (1020) to perform primary packing.

In addition, the primarily-packed MLWE ciphertext may be separated into the plurality of groups (1030), and the key switching may be performed on the MLWE ciphertext of each group. In addition, the key-switched MLWE ciphertexts may be added to finally generate the single MLWE ciphertext.

If the MLWE ciphertext is generated in this way, its transformation into the RLWE ciphertext may be performed using the extraction operation described above.

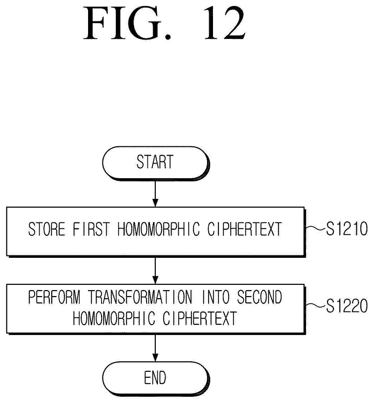

FIG. 12 is a diagram for describing a control method of the electronic device according to an embodiment of the present disclosure.

Referring to FIG. 12, the plurality of first homomorphic ciphertexts homomorphically encrypted using a first method may be stored (S1210). In detail, the first homomorphic ciphertext may be transmitted from the external device, temporarily stored in the memory, and its transformation into the second homomorphic ciphertext described below may then be performed if a predetermined number of the first homomorphic ciphertexts are collected.

The stored plurality of first homomorphic ciphertexts may be transformed into the second homomorphic ciphertext using a second method (S1220). In detail, in case of storing matrix data, it may be more efficient to store the data in a bundle than to store the data individually based on a capacity of a linear term. Therefore, in the present disclosure, the plurality of homomorphic ciphertexts using the LWE scheme may be merged into the homomorphic ciphertext using the RLWE scheme and stored. This transformation process may be performed using two major schemes.

In detail, one of the schemes is to view the plurality of first homomorphic ciphertexts as the homomorphic ciphertexts each having rank k and dimension 1, transform the plurality of first homomorphic ciphertexts into the third homomorphic ciphertext having the multiple dimensions, and transform the third homomorphic ciphertext into the second homomorphic ciphertext having rank 1 and dimension N. That is, a scheme for using the intermediate step of the MLWE form described above. For example, the plurality of first homomorphic ciphertexts may be transformed into k third homomorphic ciphertexts each having rank k and dimension N/k, by using the packing method, and the k third homomorphic ciphertexts may be transformed into the single second homomorphic ciphertext by using a ring switching scheme.

Alternatively, the following scheme may be used without the intermediate step. For example, the plurality of first homomorphic ciphertexts may be transformed into the plurality of third homomorphic ciphertexts each having dimension $N_0$ lower than dimension N and rank 1, and the plurality of third homomorphic ciphertexts may be transformed into the second homomorphic ciphertext having rank 1 and dimension N.

In addition, if the second homomorphic ciphertext is generated in this way, the bootstrapping on the second homomorphic ciphertext may be performed to change the modulus of the second homomorphic ciphertext. The bootstrapping used in the present disclosure may use conventional bootstrapping or bootstrapping specialized for the present disclosure.

That is, the transformation according to the present disclosure described above may perform bootstrapping by performing the operation of expanding the modulus of the second homomorphic ciphertext (ModRaise), performing the approximation operation (EvalMod) on the second homomorphic ciphertext whose modulus is expanded by using the function set to approximate the modulated range of the plaintext, and performing a linear transformation operation CoeffToSlot to transform the homomorphic ciphertext, on which the approximation operation is performed, into the ciphertext form, without performing the linear transformation operation to transform the slot into the coefficient in the conventional bootstrapping, because all the data are entered into a coefficient coff.

In addition, the finally-generated homomorphic ciphertext may be stored. In this way, the plurality of homomorphic ciphertexts may be stored as the single homomorphic ciphertext and used, which is advantageous in terms of management and storage capacity.

FIG. 13 is a diagram for describing a rearrangement method of the homomorphic ciphertexts according to an embodiment of the present disclosure.

Referring to FIG. 13, the homomorphic operation command for the plurality of homomorphic ciphertexts may be received (S1310).

If the command is input, the homomorphic ciphertext may be rearranged (or recombined) (S1320). For example, the second homomorphic ciphertext may be transformed into the plurality of first homomorphic ciphertexts, and the plurality of first homomorphic ciphertexts corresponding to the homomorphic operation may be transformed into a fourth homomorphic ciphertext using the second method. That is, the second homomorphic ciphertext may be decomposed into the plurality of homomorphic ciphertexts using the LWE scheme, and the homomorphic ciphertexts using the LWE scheme required for the operation may be merged to generate the fourth homomorphic ciphertext using the RLWE scheme.

If the fourth homomorphic ciphertext is generated, the input homomorphic operation may be performed thereon (S1330).

The recombination process described above may be performed considering the input homomorphic operational process. In detail, it is assumed that data of an NxN matrix is stored as RLWE for each row. In this case, if RLWE that encrypts each row is required for a row-wise operation, this type of RLWE may be loaded quickly. However, if RLWE that encrypts each column is required for a column-wise operation, N combinations may be required.

If the above-described column scheme is used for each of N assemblies, N ModUps may be required. However, the columns of LWE systems that perform ModUps may be shared between the LWE systems, and the number of ModUps may thus be reduced from N^2 to N.

For example, it is assumed that NxN data is $(m_{ij})_{i,j}$ and a low-wise RLWE ciphertext of these data is $(a_i, b_i)$.

Here, $b_i = -a_i s + m_i,$

$$a_i(X) = a_{i0} - a_{i(N-1)}X - \ldots - a_{i1}X^{N-1} = \left(\sum_j a_{ij}X^j\right)^{rev,1}, \qquad b_i(X) = \sum_j b_{ij}X^j,$$

$$s(X) = \sum_j s_j X^j, \text{ and } m_i(X) = \sum_j m_{ij}X^j.$$

In this case, the LWE system that encrypts a first column may be expressed as follows.

[Equation 30]

$$(a_{ij})_{i,j}\vec{s} + \vec{b_j} = \vec{m_j}$$

In addition, for the second column, it may be seen that an LWE matrix is a matrix that circularly shifts $(a_{ij})_{i,j}$ by 1, and two matrices may thus share all the columns. Therefore, ModUp may be required only N times.

This scheme may be applied not only to a case of assembling column-encrypted RLWEs in parallel given row-encrypted RLWEs, but also to a case of assembling diagonally-encrypted RLWEs in parallel given row-encrypted RLWEs, or to a case of assembling generalized diagonally-encrypted RLWEs in parallel given row-encrypted RLWEs.

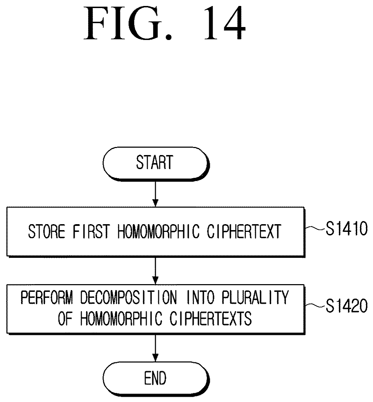

FIG. 14 is a diagram for describing a decomposition operation on the homomorphic ciphertext according to an embodiment of the present disclosure.

Referring to FIG. 14, in the present disclosure, the plurality of homomorphic ciphertexts may be merged and stored as the single homomorphic ciphertext (S1410). For example, in case of storing a large table (or matrix) of data by using the homomorphic encryption, it is advantageous to merge and store the data because the capacity of the linear term is smaller than that of individually storing each data using the homomorphic encryption based on LWE.

In this case, the electronic device 100 may decompose the homomorphic ciphertext using the RLWE scheme that corresponds to the homomorphic ciphertext into the plurality of homomorphic ciphertext using the LWE scheme if the homomorphic operation command or the transmission command for some of the homomorphic ciphertexts among the plurality of homomorphic ciphertexts is input (S1420).

In this way, if the ciphertext is decomposed into the homomorphic ciphertexts using the LWE scheme, the electronic device 100 may transmit the homomorphic ciphertext corresponding to the command to the external device in response to the input command, or perform its transformation into a new homomorphic ciphertext of the RLWE scheme for the homomorphic operation corresponding to the command.

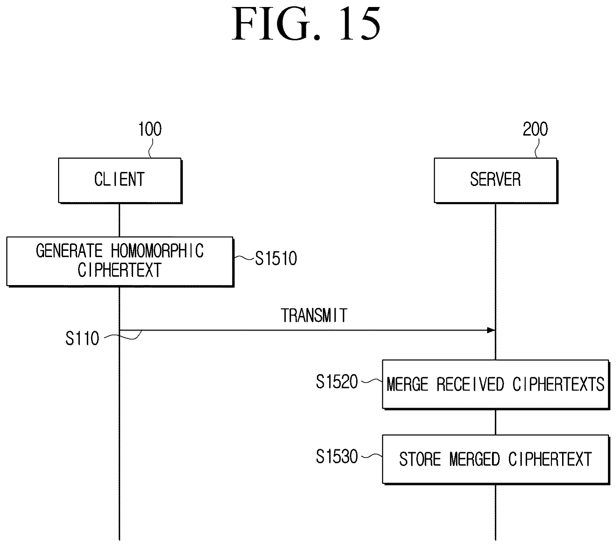

FIG. 15 is a sequence diagram for describing the transmission and reception operations of the homomorphic ciphertext according to an embodiment of the present disclosure.

FIG. 15 shows the client and the server 200. Here, the client may be the electronic device 100 shown in FIG. 1, and the server 200 may be the server shown in FIG. 1.

In detail, the client may generate the homomorphic ciphertext by performing the homomorphic encryption on the plaintext (S1510). Here, the generated homomorphic ciphertext may be the homomorphic ciphertext using the LWE scheme described above. In detail, in case of using the homomorphic ciphertext encrypted using the RLWE scheme, if the number of data is less than the number of available slots, inefficiency may occur in a data transmission amount. Considering this point, the present disclosure may use the ciphertext encrypted using the LWE scheme.

Here, the client may provide the public key used in the encryption scheme based on the LWE scheme described above to the server 200. In this case, the client may provide the seed value used for generating the random matrix instead of including the random matrix in the public key. In this case, the server 200 may acquire the random matrix by applying the seed value in the received public key to the matrix sampler function.

In this way, the amount of data transmitted between the client and the server may be reduced.

In addition, the operation described above may be repeated, and the server 200 may thus perform the application of the matrix sampler function described above once and store the value for use instead of performing the operation each time. That is, the server 200 may pre-operate and store the random matrix described above.

In addition, the client may also pre-operate and store random values used for the LWE encryption described above, thereby increasing the operational efficiency. In detail, the client may pre-computes most of randomness required for the LWE encryption through the XOF and the public key seed, and accordingly, may perform the LWE encryption based on only simple encoding and addition in real-time computation. In addition, if the server pre-computes the randomness described above, the server may also pre-compute the operations used in the transformation process according to the present disclosure, and perform the transformation operation by performing only the encoding, the addition, and the bootstrapping operation modified in the present disclosure in an actual merging process (i.e., merging process described below).

The server 200 may receive the homomorphic ciphertext using the LWE scheme, temporarily store the same, and merge the plurality of first homomorphic ciphertexts into the homomorphic ciphertext using the RLWE scheme as described above (S1520) if the plurality of homomorphic ciphertexts are received from a plurality of clients or a single client. The description above describes the merging method and thus omits its redundant description.

In addition, the server 200 may store the corresponding ciphertext as the merged homomorphic ciphertext (S1530).

By the transmission operation in this way, the present disclosure may perform the transmission and reception using the LWE having the lower capacity and the public key, thus requiring the fewer communication resources. In addition, the values based on the randomness of the LWE may be pre-operated and used in the operational process, thus enabling the faster operation performance in the encryption and merging process described above.

Although each of the various embodiments is described above, each embodiment is not necessarily implemented individually and may be implemented together in a single product, either entirely or partially coupled with at least one other embodiment.

The various embodiments of the present disclosure may be implemented in software including an instruction stored on a machine-readable storage medium (for example, a computer-readable storage medium). A machine may be a device that invokes the stored instruction from a storage medium, may be operated based on the invoked instruction, and may include the electronic device 100 or 200 according to the disclosed embodiments.

In detail, a non-transitory readable storage medium having software stored thereon may be provided for sequentially performing a step of generating the secret key by randomly combining values within a predetermined range based on the prestored data, a step of generating the public key by using the secret key and the error, a step of storing the secret key and the public key, and a step of transmitting the public key to the external device.

Alternatively, a non-transitory readable storage medium having software stored thereon may be provided for sequentially performing a step of acquiring a random vector r randomly extracted from the values within the predetermined range, a step of acquiring a random matrix A and a random vector b from the public key, a step of acquiring a first value c1 by rounding a result value acquired by performing the operation on the basis of the random matrix A and a second value c2 by rounding a result value acquired by performing the operation on the basis of the random vector b, the random vector r, and the data, and a step of generating the ciphertext including the first value and the second value.

A device including the non-transitory readable medium may perform the operation described in the various embodiments described above, such as the public key generation, the encryption, or the decryption.

Regarding the non-transitory readable storage medium, the term "non-transitory" indicates that the storage medium is tangible without including a signal, and does not distinguish whether data are semi-permanently or temporarily stored on the storage medium.

Alternatively, a program for performing the method according to the various embodiments described above may be distributed online via an application store. In case of the online distribution, at least portions of the computer program product may be at least temporarily stored on a storage medium such as the memory of a manufacturer server, a server of an application store, or a relay server, or may be temporarily generated.

Each of the components (for example, modules or programs) according to the various embodiments may include a single entity or a plurality of entities, and some of the corresponding sub-components described above may be omitted or other sub-components may be further included in the various embodiments. Alternatively or additionally, some of the components (for example, the modules or the programs) may be integrated into the single entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the present disclosure has been described hereinabove with reference to the accompanying drawings, the scope of the present disclosure is determined based on the claims described below and should not be construed as being limited to the embodiments and/or drawings provided above. In addition, it should be clearly understood that improvements, changes, and modifications apparent to those skilled in the art of the present disclosure described in the claims are also included in the scope of the present disclosure.

## Claims

1. A method of an electronic device for processing a ciphertext, the method comprising:

   storing a plurality of first homomorphic ciphertexts homomorphically encrypted using a first method; and
   transforming the stored plurality of first homomorphic ciphertexts into a second homomorphic ciphertext using a second method,
   wherein the transforming includes
   transforming the plurality of first homomorphic ciphertexts into a third homomorphic ciphertext having multiple dimensions by viewing the plurality of first homomorphic ciphertexts as homomorphic ciphertexts each having rank k and dimension 1, and
   transforming the third homomorphic ciphertext into the second homomorphic ciphertext having rank 1 and dimension N.

2. The method as claimed in claim 1, wherein in the performing of the transformation into the third homomorphic ciphertext,

   the plurality of first homomorphic ciphertexts are transformed into k third homomorphic ciphertexts each having rank k and dimension N/k, and
   in the performing of the transformation into the second homomorphic ciphertext,
   the k third homomorphic ciphertexts are transformed into the single second homomorphic ciphertext.

3. The method as claimed in claim 2, wherein in the performing of the transformation into the third homomorphic ciphertext,

   the transformation into the third homomorphic ciphertext is performed by packing a predetermined number of second homomorphic ciphertexts among the plurality of first homomorphic ciphertexts, and
   in the performing of the transformation into the second homomorphic ciphertext,
   the transformation into the second homomorphic ciphertext is performed by performing ring switching on the homomorphic ciphertext using a ring having a dimension k times larger than each dimension of the k third homomorphic ciphertexts.

4. The method as claimed in claim 1, wherein in the performing of the transformation into the third homomorphic ciphertext,

   the plurality of first homomorphic ciphertexts are transformed into the plurality of third homomorphic ciphertexts each having dimension $N_0$ lower than dimension N and rank 1, and
   in the performing of the transformation into the second homomorphic ciphertext,
   the plurality of third homomorphic ciphertexts are transformed into the second homomorphic ciphertext having rank 1 and dimension N.

5. The method as claimed in claim 1, further comprising bootstrapping a modulus of the second homomorphic ciphertext to change the modulus of the second homomorphic ciphertext.

6. The method as claimed in claim 5, wherein the bootstrapping includes

   expanding the modulus of the second homomorphic ciphertext,

performing an approximation operation on the second homomorphic ciphertext whose modulus is expanded by using a function set to approximate a modulated range of a plaintext, and

performing a linear transformation on the homomorphic ciphertext, on which the approximation operation is performed, into a ciphertext form.

7. The method as claimed in claim 1, further comprising:

acquiring a public key used for encrypting the first homomorphic ciphertext; and
acquiring a random matrix included in the public key by applying a random matrix sampler function to a seed value included in the public key.

8. The method as claimed in claim 1, further comprising:

receiving a homomorphic operation command using some of the first homomorphic ciphertexts among the plurality of first homomorphic ciphertexts;
transforming the second homomorphic ciphertext into the plurality of first homomorphic ciphertexts;
transforming the plurality of first homomorphic ciphertexts corresponding to the homomorphic operation into a fourth homomorphic ciphertext using the second method; and
performing the homomorphic operation on the fourth homomorphic ciphertext.

9. The method as claimed in claim 1, further comprising:

receiving the plurality of first homomorphic ciphertexts; and
storing the second homomorphic ciphertext including the received plurality of first homomorphic ciphertexts.

10. The method as claimed in claim 1, further comprising:

receiving a transmission command for at least one first homomorphic ciphertext among the plurality of first homomorphic ciphertexts;
transforming the second homomorphic ciphertext into the plurality of first homomorphic ciphertexts; and
transmitting the at least one first homomorphic ciphertext corresponding to the transmission command to an external device.

11. An electronic device comprising:

a memory; and
a processor configured to transform a plurality of first homomorphic ciphertexts homomorphically encrypted using a first method into a second homomorphic ciphertext using a second method;
wherein the processor is configured to
transform the plurality of first homomorphic ciphertexts into a third homomorphic ciphertext having multiple dimensions by viewing the plurality of first homomorphic ciphertexts as homomorphic ciphertexts each having rank k and dimension 1, and
transform the third homomorphic ciphertext into the second homomorphic ciphertext having rank 1 and dimension N.

12. The device as claimed in claim 11, wherein the processor is configured to

transform the plurality of first homomorphic ciphertexts into k third homomorphic ciphertexts each having rank k and dimension N/k, and
transform the k third homomorphic ciphertexts into the single second homomorphic ciphertext.

13. The device as claimed in claim 12, wherein the processor is configured to

perform the transformation into the third homomorphic ciphertext by packing a predetermined number of second homomorphic ciphertexts among the plurality of second homomorphic ciphertexts, and
perform the transformation into the second homomorphic ciphertext by performing ring switching on the homomorphic ciphertext using a ring having a dimension k times larger than each dimension of the k third homomorphic ciphertexts.

**14.** The device as claimed in claim 11, wherein the processor is configured to

transform the plurality of first homomorphic ciphertexts into the plurality of third homomorphic ciphertexts each having dimension $N_0$ lower than dimension N and rank 1, and
transform the plurality of third homomorphic ciphertexts into the second homomorphic ciphertext having rank 1 and dimension N.

**15.** The device as claimed in claim 11, wherein the processor is configured to

expand a modulus of the second homomorphic ciphertext to change the modulus of the second homomorphic ciphertext,
perform an approximation operation on the second homomorphic ciphertext whose modulus is expanded by using a function set to approximate a modulated range of a plaintext, and
perform a linear transformation on the homomorphic ciphertext, on which the approximation operation is performed, into a ciphertext form.

**16.** The device as claimed in claim 11, wherein the processor is configured to

acquire a public key used for encrypting the first homomorphic ciphertext, and
acquire a random matrix included in the public key by applying a random matrix sampler function to a seed value included in the public key.

**17.** The device as claimed in claim 11, wherein the processor is configured to

transform the second homomorphic ciphertext into the plurality of first homomorphic ciphertexts if a homomorphic operation command using some of the first homomorphic ciphertexts among the plurality of first homomorphic ciphertexts is input,
transform the plurality of first homomorphic ciphertexts corresponding to the homomorphic operation into a fourth homomorphic ciphertext using the second method, and
perform the homomorphic operation on the fourth homomorphic ciphertext.

**18.** The device as claimed in claim 11, further comprising a communication device receiving the plurality of first homomorphic ciphertexts,
wherein the processor is configured to store the second homomorphic ciphertext including the received plurality of first homomorphic ciphertexts in the memory.

**19.** The device as claimed in claim 11, further comprising a communication device communicating with an external device,

wherein the processor is configured to
transform the second homomorphic ciphertext into the plurality of first homomorphic ciphertexts if a transmission command for at least one first homomorphic ciphertext among the plurality of first homomorphic ciphertexts is input, and
control the communication device to transmit the at least one first homomorphic ciphertext corresponding to the transmission command to the external device.

**20.** A computer-readable recording medium including a program for executing a method for processing a ciphertext, wherein the method includes

receiving a plurality of first homomorphic ciphertexts homomorphically encrypted using a first method, and
transforming the received plurality of first homomorphic ciphertexts into a second homomorphic ciphertext using a second method, and
the transforming includes
transforming the plurality of first homomorphic ciphertexts into a third homomorphic ciphertext having multiple dimensions by viewing the plurality of first homomorphic ciphertexts as homomorphic ciphertexts each having rank k and dimension 1, and
transforming the third homomorphic ciphertext into the second homomorphic ciphertext having rank 1 and dimension N.

# FIG. 1

200

FIRST
SERVER DEVICE

$Ct_1, Ct_2$     $Ct_1 + Ct_2$

10

NETWORK     $Ct_1 + Ct_2$     300

SECOND
SERVER DEVICE

$Ct_1$     $Ct_2$

FIRST
ELECTRONIC DEVICE     SECOND
ELECTRONIC DEVICE     . . .     N-TH
ELECTRONIC DEVICE

100-1     100-2     100-n

# FIG. 2

100

# FIG. 3

<u>100</u>

120

110 — | MEMORY |  ⟷  | PROCESSOR |  ⟷  | MANIPULATION INPUT DEVICE | — 150

130 — | COMMUNICATION DEVICE |  ⟷  | | |  ⟷  | DISPLAY | — 140

# FIG. 4

$$\vec{m} \xrightarrow{\Delta} \boxed{\text{Ecd}} \rightarrow \text{m(x)} \xrightarrow{\text{pk}} \boxed{\text{Ecd}} \rightarrow \text{Ct} \xrightarrow{\text{sk}} \boxed{\text{Dec}} \rightarrow \text{m'(x)} \xrightarrow{\Delta} \boxed{\text{Dcd}} \rightarrow \vec{m}'(\simeq \vec{m})$$

124                125                126                127

# FIG. 5

# FIG. 6

# FIG. 7

$$N_{BTS} \cdot LWE^K_{Q_{Enc}} = N_{BTS} / N_{KS} \cdot (N_{KS} \cdot LWE^K_{Q_{Enc}}) \xrightarrow{N_{BTS}/N_{KS} \cdot BaseHERMES^{K,k}_{N_{KS}}} N_{BTS}/N_{KS} \cdot RLWE_{Q_{Enc},N_{KS}}$$

$$\downarrow \begin{array}{l} Ring \\ Switching \end{array}$$

$$1 \cdot RLWE_{Q_{comp},N_{BTS}} \xleftarrow{HalfBTS} 1 \cdot RLWE_{Q_{Enc},N_{BTS}}$$

# FIG. 8

Client

Server

815

public seed

BaseHERMES
keys

public seed

820

Base ring
packing

810

public seed

s → LWE.Enc$_s$(0)

HalfBTS
keys

825

Offline
Online

m → Encode

805

b

830

HalfBTS

RLWE encrypted message

# FIG. 9

$$\text{MLWE}_{N/K}^{K} \quad a_0(X_{N/K})s_0(X_{N/K}) + \cdots + a_{k-1}(X_{N/K})s_{k-1}(X_{N/K}) + b(X_{N/K}) = m(X_{N/K}) \text{ in } R_{q,N/K}$$

$$\Updownarrow$$

$$( a_0 \quad a_1 \quad \cdots \quad a_{k-1} ) \begin{pmatrix} s_0 \\ s_1 \\ \vdots \\ s_{k-1} \end{pmatrix} + b = m \text{ in } R_{q,N/K}$$

$$\Updownarrow$$

$$\underbrace{\begin{pmatrix} a_0 & a_1 & \cdots & a_{k-1} \\ X_{N/K}^{-1} a_{k-1} & a_0 & \cdots & a_{k-2} \\ \vdots & \vdots & \ddots & \vdots \\ X_{N/K}^{-1} a_1 & X_{N/K}^{-1} a_2 & \cdots & a_0 \end{pmatrix}}_{= A^{tw,k}(X_N)} \underbrace{\begin{pmatrix} s_0 \\ s_1 \\ \vdots \\ s_{k-1} \end{pmatrix}}_{= S(X_N)} + \underbrace{\begin{pmatrix} b_0 \\ 0 \\ \vdots \\ 0 \end{pmatrix}}_{= B(X_N)} = \underbrace{\begin{pmatrix} m \\ * \\ \vdots \\ * \end{pmatrix}}_{= M(X_N)} \text{ in } R_{q,N}$$

$$\Updownarrow$$

$$\text{RLWE}_N \qquad A^{tw,k}(X_N)S(X_N) + B(X_N) = M(X_N) \text{ in } R_{q,N}$$

# FIG. 10

# FIG. 11

---

**Algorithm 1: ModPack$_N^{K,k,k'}$ : $k,k' \cdot \text{MLWE}_{q,N/k}^{K} \to \text{MLWE}_{q,N/k'}^{k'}$**

$\quad$ Input $\quad$ : $(c_j)_{0 \le j < k/k'}$

$\qquad\qquad\quad$ $(\text{swk}_j)_{0 \le j < k/k'}$

$\quad$ Output : $C'$

1 $C \leftarrow \text{Combine}_{N/k,k/k'}^{K}((c_j)_{0 \le j < k/k'})$

2 $C_0 \leftarrow (C[0], C[1],\ldots,C[k'])$

3 for $j = 1,\ldots,K/k'$ do

4 $\quad|\quad C_j \leftarrow (0,C[jk' + 1], C[jk' + 2],\ldots,C[jk' + k'])$

5 end for

6 $C' \leftarrow \text{Extract}_{q,N}^{k'} \circ \text{KS}(\text{Embed}_{q,N}^{k'}(C_j)_{0 \le j < k/k'}; (\text{swk}_j)_{0 \le j < k/k'})$

7 return $C'$

---

# FIG. 12

```
            ┌──────────┐
            │  START   │
            └────┬─────┘
                 │
                 ▼
┌───────────────────────────────────────┐
│  STORE FIRST HOMOMORPHIC CIPHERTEXT    │~S1210
└───────────────────┬───────────────────┘
                    │
                    ▼
┌───────────────────────────────────────┐
│  PERFORM TRANSFORMATION INTO SECOND    │~S1220
│       HOMOMORPHIC CIPHERTEXT           │
└───────────────────┬───────────────────┘
                    │
                    ▼
            ┌──────────┐
            │   END    │
            └──────────┘
```

# FIG. 13

```
          ┌─────────────┐
          │    START     │
          └──────┬──────┘
                 │
                 ▼
  ┌────────────────────────────────────────┐
  │ RECEIVE HOMOMORPHIC OPERATION COMMAND  │──S1310
  └────────────────────┬───────────────────┘
                       │
                       ▼
  ┌────────────────────────────────────────┐
  │    REARRANGE HOMOMORPHIC CIPHERTEXT    │──S1320
  └────────────────────┬───────────────────┘
                       │
                       ▼
  ┌────────────────────────────────────────┐
  │     PERFORM HOMOMORPHIC OPERATION      │──S1330
  └────────────────────┬───────────────────┘
                       │
                       ▼
             ┌─────────────┐
             │     END      │
             └─────────────┘
```

# FIG. 14

```
         ┌─────────────┐
         │    START     │
         └──────┬──────┘
                │
                ▼
  ┌──────────────────────────────────┐
  │ STORE FIRST HOMOMORPHIC CIPHERTEXT │──S1410
  └──────────────┬───────────────────┘
                 │
                 ▼
  ┌──────────────────────────────────┐
  │ PERFORM DECOMPOSITION INTO PLURALITY│──S1420
  │    OF HOMOMORPHIC CIPHERTEXTS      │
  └──────────────┬───────────────────┘
                 │
                 ▼
         ┌─────────────┐
         │     END      │
         └─────────────┘
```

# FIG. 15

CLIENT 100

SERVER 200

GENERATE HOMOMORPHIC CIPHERTEXT ~S1510

TRANSMIT

S110

S1520~ MERGE RECEIVED CIPHERTEXTS

S1530~ STORE MERGED CIPHERTEXT

## INTERNATIONAL SEARCH REPORT

| International application No. |
| --- |
| **PCT/KR2023/021101** |

| A. | CLASSIFICATION OF SUBJECT MATTER |
| --- | --- |
| | **H04L 9/00**(2006.01)i |

According to International Patent Classification (IPC) or to both national classification and IPC

| B. | FIELDS SEARCHED |
| --- | --- |

Minimum documentation searched (classification system followed by classification symbols)

H04L 9/00(2006.01); G06F 21/60(2013.01); H04L 9/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동형 암호화(homomorphic encryption), 동형 암호문(homomorphic ciphertext), 랭크(rank), 차원(dimension), 암호문 변환(ciphertext transformation)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2021-0058229 A1 (THE BOARD OF REGENTS OF THE UNIVERSITY OF TEXAS SYSTEM et al.) 25 February 2021 (2021-02-25) <br> See paragraphs [0063]-[0065]; and figure 7. | 1-20 |
| A | KR 10-2022-0121221 A (SEOUL NATIONAL UNIVERSITY R&DB FOUNDATION et al.) 31 August 2022 (2022-08-31) <br> See paragraphs [0214]-[0217]; and figure 7. | 1-20 |
| A | KR 10-2022-0120410 A (SAMSUNG ELECTRONICS CO., LTD. et al.) 30 August 2022 (2022-08-30) <br> See paragraphs [0113]-[0115]; and figure 4. | 1-20 |
| A | US 2020-0358594 A1 (SAP SE) 12 November 2020 (2020-11-12) <br> See paragraphs [0057]-[0069]; and figure 3. | 1-20 |
| A | KR 10-2018-0013064 A (SEOUL NATIONAL UNIVERSITY R&DB FOUNDATION) 07 February 2018 (2018-02-07) <br> See paragraphs [0032]-[0036]; and figure 1. | 1-20 |

| ☐ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 March 2024** | **29 March 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/021101**

| Patent document cited in search report | | | Publication date (day/month/year) | Patent family member(s) | | | Publication date (day/month/year) |
|---|---|---|---|---|---|---|---|
| US | 2021-0058229 | A1 | 25 February 2021 | US | 11431470 | B2 | 30 August 2022 |
| KR | 10-2022-0121221 | A | 31 August 2022 | None | | | |
| KR | 10-2022-0120410 | A | 30 August 2022 | US | 11870889 | B2 | 09 January 2024 |
| | | | | US | 2022-0271922 | A1 | 25 August 2022 |
| US | 2020-0358594 | A1 | 12 November 2020 | CN | 111917533 | A | 10 November 2020 |
| | | | | EP | 3737030 | A1 | 11 November 2020 |
| | | | | US | 11190336 | B2 | 30 November 2021 |
| KR | 10-2018-0013064 | A | 07 February 2018 | KR | 10-1861089 | B1 | 25 May 2018 |

Form PCT/ISA/210 (patent family annex) (July 2022)